# EUROPEAN PATENT APPLICATION

(11) **EP 3 902 366 A1**
(43) Date of publication of application: **27.10.2021**
(21) Application number: 20745572.6
(22) Date of filing: 20.01.2020
(51) Int. Cl.: H04W 74/08

(54) **COMMUNICATION METHOD AND APPARATUS**

(30) Priority: 25.01.2019 CN 201910074784
(71) Applicant: Huawei Technologies Co., Ltd., Longgang District, Shenzhen, Guangdong 518129, (CN)
(72) Inventor: YOU, Chunhua, Shenzhen, Guangdong 518129 (CN); GUO, Yinghao, Shenzhen, Guangdong 518129 (CN)
(74) Representative: MERH-IP Matias Erny Reichl Hoffmann Patentanwälte PartG mbB
(86) International application number: PCT/CN2020/073130
(87) International publication number: WO 2020/151637

(57) **Abstract**

Embodiments of this application disclose a communication method and apparatus, to reduce a latency of random access of a terminal device. The method in the embodiments of this application includes: sending, by a terminal device, a first message to a network device, where the first message includes a random access signal and information used for contention resolution, and the random access signal and the information used for contention resolution are transmitted by using pre-assigned resources; and receiving, by the terminal device, a response message for the first message from the network device, where the response message is used to indicate a random access status of the terminal device.

## Description

This application claims priority to Chinese Patent Application No. 201910074784.5, filed with the China National Intellectual Property Administration on January 25, 2019 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A random access (RA) procedure is used to establish uplink synchronization between a terminal device and a network device, and includes a contention-based random access procedure and a non-contention-based random access procedure. Currently, the contention-based random access procedure is completed in four steps. In the first step, the terminal device sends a random access request to the network device. The random access request may also be referred to as a message 1 (Msg1), and includes a random access preamble. In the second step, the network device sends a random access response (random access response, RAR) message to the terminal device. The RAR message may also be referred to as a message 2 (Msg2). In the third step, after receiving the RAR message, the terminal device transmits a message based on RAR scheduling. The message may also be referred to as a message 3 (Msg3). In the fourth step, the network device sends information used for contention resolution to the terminal device. A message carrying the information is referred to as a message 4 (Msg4).

It can be learned that the existing contention-based random access procedure includes a relatively large quantity of steps, and a latency is relatively long. Therefore, the existing contention-based random access procedure is not applicable to a scenario with a relatively high latency requirement.

### SUMMARY

Embodiments of this application provide a communication method and apparatus, to reduce a latency of random access of a terminal device.

According to a first aspect, an embodiment of this application provides a communication method, including:

In a random access procedure, a terminal device may transmit a random access signal and information used for contention resolution through a first message by using pre-assigned resources; then a network device decodes the random access signal and the information used for contention resolution; the terminal device may receive a response message for the first message from the network device, thereby determining a random access status of the terminal device, to be specific, whether random access succeeds. In this embodiment, because the terminal device has a pre-assigned resource used to transmit the information used for contention resolution, and the information used for contention resolution and the random access signal are sent in one step, the random access procedure is reduced. Therefore, interaction procedures in the random access procedure are fewer than those in a conventional technology, thereby reducing a latency of the random access of the terminal device.

In a possible implementation, the random access signal may be a random access preamble and/or a demodulation reference signal (demodulation reference signal, DMRS). In this possible implementation, two possible forms of the random access signal are provided.

In another possible implementation, the information used for contention resolution may include at least one of the following information: an identifier of the terminal device, a cause value of the random access, and a random number. In this possible implementation, information that may be included in the information used for contention resolution in the random access procedure is provided.

In another possible implementation, the response message may include a contention resolution identifier, the contention resolution identifier is used to indicate that contention is resolved or used to indicate that the random access succeeds, and the contention resolution identifier is obtained based on the information used for contention resolution. In this possible implementation, a specific manner in which the terminal device determines that the random access succeeds is provided.

In another possible implementation, the contention resolution identifier may include a part or all of content of the information used for contention resolution, or is downlink control information scrambled by using a temporary cell radio network temporary identifier (cell radio network temporary identifier, C-RNTI) of the terminal device. In this possible implementation, two possible forms of the contention resolution identifier are provided.

In another possible implementation, the response message may further include length information of the contention resolution identifier, the contention resolution identifier may include the part or all of the content of the information used for contention resolution, and the method may further include: The terminal device may determine, based on the length information of the contention resolution identifier and the contention resolution identifier, that the contention is resolved. In this possible implementation, a length of the contention resolution identifier is flexible and variable. After determining the length of the contention resolution identifier, the terminal device determines, by comparing whether the contention resolution identifier is consistent with the part or all of the content of the information used for contention resolution, whetherthe contention is resolved.

In another possible implementation, the response message may further include one or a combination of the following: the temporary cell radio network temporary identifier, indication information of a timing advance, uplink grant information, downlink assignment information, and indication information of a hybrid automatic repeat request (hybrid automatic repeat request, HARQ) feedback. In this possible implementation, specific content that may be included in the response message is provided, thereby improving integrity of the solution.

In another possible implementation, the response message may include a first message and a second message, the first message may include information indicating that a contention resolution identifier exists, and the second message may include the contention resolution identifier. In this possible implementation, another response message feedback manner is provided, thereby improving diversity of the solution.

In another possible implementation, the first message may further include one or a combination of the following: a temporary cell radio network temporary identifier, indication information of a timing advance, uplink grant information, downlink assignment information, and indication information of a HARQ feedback; or the second message may further include one or a combination of the following: a temporary cell radio network temporary identifier, indication information of a timing advance, uplink grant information, downlink assignment information, and indication information of a HARQ feedback. In this possible implementation, content that may be carried in the first message and the second message is provided.

In another possible implementation, the method may further include: First, the terminal device may receive first configuration information and second configuration information from the network device, where the first configuration information is used to configure a first resource for transmitting the random access signal, and the second configuration information is used to configure a second resource for transmitting the information used for contention resolution. Then that the terminal device sends the first message to the network device may include: The terminal device sends the random access signal by using the first resource configured by using the first configuration information, and sends, by using the second resource configured by using the second configuration information, the information used for contention resolution. In this possible implementation, a specific configuration manner in which the network device configures, for the terminal device, the first resource for transmitting the random access signal and the second resource for transmitting the information used for contention resolution is provided.

In another possible implementation, the method may further include: First, the terminal device may receive a correspondence between first configuration information and second configuration information from the network device, where the first configuration information is used to configure a resource for transmitting the random access signal, and the second configuration information is used to configure a resource for transmitting the information used for contention resolution; then the terminal device receives indication information from the network device, where the indication information is used to indicate target first configuration information. That the terminal device sends the first message to the network device may include: The terminal device transmits the random access signal by using a first resource configured by using the target first configuration information, and transmits, by using a second resource configured by using target second configuration information corresponding to the target first configuration information, the information used for contention resolution. In this possible implementation, another specific configuration manner in which the network device configures, for the terminal device, the first resource for transmitting the random access signal and the second resource for transmitting the information used for contention resolution is provided, thereby improving diversity of the solution.

In another possible implementation, the first configuration information may include indication information of a time-frequency resource, and the first configuration information may further include at least one of the following information: indication information of a frequency domain resource, a preamble sequence, and a root sequence. The second configuration information may include at least one of the following information: indication information of a modulation and coding scheme (modulation and coding scheme, MCS), indication information of an MCS table, and indication information of a resource for transmitting the information used for contention resolution. In this possible implementation, content that may be carried in the first configuration information and the second configuration information is provided.

In another possible implementation, the response message may be further used to indicate new transmission, and the method may further include: The terminal device may perform new transmission of data based on the response message. In this possible implementation, a solution in which the response message is used to indicate the terminal device to perform the new transmission of the data is provided.

In another possible implementation, the response message may further include uplink grant information, and the uplink grant information may include indication information of a physical resource block and indication information of a modulation and coding scheme. That the terminal device performs the new transmission of the data based on the response message may include: First, the terminal device may determine a target physical resource block based on the indication information of the physical resource block, and may determine a target modulation and coding scheme based on the indication information of the modulation and coding scheme; then the terminal device sends the data to the network device on the target physical resource block by using the target modulation and coding scheme. In this possible implementation, a sending manner in which the terminal device performs the new transmission of the data is provided.

In another possible implementation, the response message may include indication information of the new transmission or a parameter of the response message is used to indicate the new transmission, the indication information of the new transmission may include the contention resolution identifier or a first radio network temporary identifier RNTI of the terminal device, and the parameter of the response message may include an information element format of the response message or a quantity of response messages. In this possible implementation, a plurality of specific manners of indicating the new transmission by using the response message are provided.

In another possible implementation, the response message may be further used to indicate retransmission, and the method may further include: The terminal device may perform, based on the response message, retransmission of the information used for contention resolution. In this possible implementation, a solution in which the response message is used to indicate the terminal device to perform the retransmission of the information used for contention resolution is provided.

In another possible implementation, the response message may further include uplink grant information, and the uplink grant information may include indication information of a physical resource block and indication information of a modulation and coding scheme. That the terminal device performs, based on the response message, the retransmission of the information used for contention resolution may include: First, the terminal device may determine a target physical resource block based on the indication information of the physical resource block, and may determine a target modulation and coding scheme based on the indication information of the modulation and coding scheme; then the terminal device retransmits, to the network device on the target physical resource block by using the target modulation and coding scheme, the information used for contention resolution. In this possible implementation, a manner in which the terminal device performs the retransmission of the information used for contention resolution is provided, thereby improving practicability of the solution.

In another possible implementation, the response message may include indication information of the retransmission or a parameter of the response message is used to indicate the retransmission, the indication information of the retransmission may include information indicating that no contention resolution identifier exists or a second RNTI of the terminal device, and the parameter of the response message may include an information element format of the response message or a quantity of response messages. In this possible implementation, a plurality of specific manners of indicating the retransmission by using the response message are provided.

In another possible implementation, the method may further include: The terminal device discards the resource used to transmit the random access signal; and/or the terminal device discards the resource used to transmit the information used for contention resolution. In this possible implementation, when the random access succeeds, the terminal device may discard the resource used to transmit the random access signal and the resource used to transmit the information used for contention resolution. For example, this may be implemented by discarding a configuration of the random access signal and a configuration of the information used for contention resolution.

According to a second aspect, an embodiment of this application provides a communication method, including:

In a random access procedure, a network device may receive a first message sent by a terminal device by using pre-assigned resources, where the first message includes a random access signal and information used for contention resolution; then the network device decodes the random access signal and the information used for contention resolution, to obtain a decoding result; the network device then sends a response message to the terminal device based on the decoding result, to notify a random access status of the terminal device, to be specific, whether random access succeeds. In the foregoing procedure, because the terminal device has a pre-assigned resource used to transmit the information used for contention resolution, and the information used for contention resolution and the random access signal are sent in one step, the random access procedure is reduced. Therefore, interaction procedures in the random access procedure are fewer than those in a conventional technology, thereby reducing a latency of the random access of the terminal device.

In a possible implementation, the random access signal may be a random access preamble and/or a demodulation reference signal DMRS. In this possible implementation, two possible forms of the random access signal are provided.

In another possible implementation, the information used for contention resolution may include at least one of the following information: an identifier of the terminal device, a cause value of the random access, and a random number. In this possible implementation, information that may be included in the information used for contention resolution in the random access procedure is provided.

In another possible implementation, when the network device successfully decodes the information used for contention resolution, the response message may include a contention resolution identifier, the contention resolution identifier is used to indicate that contention is resolved or used to indicate that the random access succeeds, and the contention resolution identifier is obtained based on the information used for contention resolution. In this possible implementation, the network device may notify, by using the response message to carry the contention resolution identifier, the terminal device that the contention is resolved. That is, a specific notification manner is provided, thereby improving practicability of the solution.

In another possible implementation, the contention resolution identifier may include a part or all of content of the information used for contention resolution or downlink control information scrambled by using a temporary cell radio network temporary identifier C-RNTI of the terminal device. In this possible implementation, two possible forms of the contention resolution identifier are provided. During actual application, feasibility and diversity of the solution are improved.

In another possible implementation, the response message may further include length information of the contention resolution identifier, and the contention resolution identifier includes the part or all of the content of the information used for contention resolution. In this possible implementation, a length of the contention resolution identifier is flexible and variable. Specifically, the length of the contention resolution identifier may be set based on an actual requirement, thereby improving flexibility of the solution.

In another possible implementation, the response message may further include one or a combination of the following: the temporary cell radio network temporary identifier, indication information of a timing advance, uplink grant information, downlink assignment information, and indication information of a HARQ feedback. In this possible implementation, specific content that may be included in the response message is provided, thereby improving integrity of the solution.

In another possible implementation, when the network device successfully decodes the information used for contention resolution, that the network device sends a response message to the terminal device may include: First, the network device sends a first message to the terminal device, where the first message includes information indicating that a contention resolution identifier exists; the network device may send a second message to the terminal device, where the second message includes the contention resolution identifier. In this possible implementation, the network device feeds back and indicates, to the terminal device by using two messages, that the random access of the terminal device succeeds. That is, another response message feedback manner is provided. During actual application, diversity and practicability of the solution are improved.

In another possible implementation, the first message may further include one or a combination of the following: a temporary cell radio network temporary identifier, indication information of a timing advance, uplink grant information, downlink assignment information, and indication information of a HARQ feedback; or the second message may further include one or a combination of the following: a temporary cell radio network temporary identifier, indication information of a timing advance, uplink grant information, downlink assignment information, and indication information of a HARQ feedback. In this possible implementation, content that may be carried in the first message and the second message is provided, thereby improving integrity of the solution.

In another possible implementation, the method may further include: The network device may send first configuration information and second configuration information to the terminal device, where the first configuration information is used to configure a first resource for transmitting the random access signal, and the second configuration information is used to configure a second resource for transmitting the information used for contention resolution. In this possible implementation, a specific configuration manner in which the network device configures the first resource and the second resource for the terminal device is provided. During actual application, feasibility and practicability of the solution are improved.

In another possible implementation, the method may further include: The network device sends a correspondence between first configuration information and second configuration information to the terminal device, where the first configuration information is used to configure a resource for transmitting the random access signal, and the second configuration information is used to configure a resource for transmitting the information used for contention resolution; then the network device sends indication information to the terminal device, where the indication information is used to indicate target first configuration information, and the target first configuration information is used to configure a first resource for transmitting the random access signal. In this possible implementation, another specific configuration manner in which the network device configures the first resource and the second resource for the terminal device is provided. During actual application, diversity and practicability of the solution are improved.

In another possible implementation, the first configuration information may include indication information of a time-frequency resource, and the first configuration information may further include at least one of the following information: indication information of a frequency domain resource, a preamble sequence, and a root sequence. The second configuration information may include at least one of the following information: indication information of a modulation and coding scheme, indication information of an MCS table, and indication information of a resource for transmitting the information used for contention resolution. In this possible implementation, content that may be carried in the first configuration information and the second configuration information is provided. During actual application, integrity and practicability of the solution are improved.

In another possible implementation, the response message is further used to indicate new transmission. The method may further include: The network device receives data sent by the terminal device. In this possible implementation, when the network device indicates, by using the response message, the terminal device to perform new transmission of the data, the network device may receive the data sent by the terminal device.

In another possible implementation, the response message may further include indication information of the new transmission or a parameter of the response message is used to indicate the new transmission, the indication information of the new transmission includes the contention resolution identifier or a first radio network temporary identifier RNTI of the terminal device, and the parameter of the response message may include an information element format of the response message or a quantity of response messages. In this possible implementation, a plurality of specific manners of indicating the new transmission by using the response message are provided, thereby improving diversity and practicability of the solution.

In another possible implementation, when the network device fails to decode the information used for contention resolution, the response message is further used to indicate retransmission. The method may further include: The network device receives the information used for contention resolution and retransmitted by the terminal device. In this possible implementation, the network device indicates, by using the response message, the terminal device to perform the retransmission of the information used for contention resolution. A specific manner of indicating the retransmission is provided. During actual application, practicability of the solution is improved.

In another possible implementation, the response message may include indication information of the retransmission or a parameter of the response message is used to indicate the retransmission, the indication information of the retransmission includes information indicating that no contention resolution identifier exists or a second RNTI of the terminal device, and the parameter of the response message may include an information element format of the response message or a quantity of response messages. In this possible implementation, a plurality of specific manners of indicating the retransmission by using the response message are provided, thereby improving diversity and practicability of the solution.

According to a second aspect, an embodiment of this application provides a communication apparatus, including a unit or a means (means) configured to perform the steps in the first aspect.

According to a fourth aspect, an embodiment of this application provides a communication apparatus, including a unit or a means (means) configured to perform the steps in the second aspect.

According to a fifth aspect, an embodiment of this application provides a communication apparatus, including a processor and an interface circuit. The processor is configured to: communicate with another apparatus through the interface circuit, and perform the method provided in the first aspect. A quantity of processors is one or more.

According to a sixth aspect, an embodiment of this application provides a communication apparatus, including a processor and an interface circuit. The processor is configured to: communicate with another apparatus through the interface circuit, and perform the method provided in the second aspect. A quantity of processors is one or more.

According to a seventh aspect, an embodiment of this application provides a communication apparatus, including a processor. The processor is configured to be connected to a memory, and is configured to invoke a program stored in the memory, to perform the method provided in the first aspect. The memory may be located inside the apparatus, or may be located outside the apparatus. In addition, a quantity of processors is one or more.

According to an eighth aspect, an embodiment of this application provides a communication apparatus, including a processor. The processor is configured to be connected to a memory, and configured to invoke a program stored in the memory, to perform the method provided in the second aspect. The memory may be located inside the apparatus, or may be located outside the apparatus. In addition, a quantity of processors is one or more.

According to a ninth aspect, an embodiment of this application provides a computer program including an instruction. When executed by a processor, the program is used to perform the method according to the first aspect or the second aspect.

According to a tenth aspect, an embodiment of this application provides a program product, for example, a computer-readable storage medium, including the foregoing program.

It can be learned that in the foregoing aspects, by using the pre-assigned resources, the terminal device not only transmits the random access signal but also transmits the information used for contention resolution, so that the random access signal and the information used for contention resolution are transmitted in one step. Then the network device decodes the random access signal and the information used for contention resolution, and notifies, by using the response message, the random access status of the terminal device, to be specific, whether the random access succeeds. In the foregoing procedure, because the terminal device has the pre-assigned resource used to transmit the information used for contention resolution, and the information used for contention resolution and the random access signal are sent in one step, the random access procedure is reduced. Therefore, the interaction procedures in the random access procedure are fewer than those in the conventional technology, thereby reducing the latency of the random access of the terminal device.

### BRIEF DESCRIPTION OF DRAWINGS

FIG. 1 is a schematic diagram of a communication system according to an embodiment of this application;
FIG. 2 is a schematic diagram of a network architecture according to an embodiment of this application;
FIG. 3 is a schematic diagram of another network architecture according to an embodiment of this application;
FIG. 4 is a schematic diagram of an embodiment of a communication method according to an embodiment of this application;
FIG. 5 is a schematic diagram of another embodiment of a communication method according to an embodiment of this application;
FIG. 6 is a schematic diagram of another embodiment of a communication method according to an embodiment of this application;
FIG. 7 is a schematic diagram of another embodiment of a communication method according to an embodiment of this application;
FIG. 8 is a schematic diagram of another embodiment of a communication method according to an embodiment of this application;
FIG. 9 is a schematic diagram of another embodiment of a communication method according to an embodiment of this application;
FIG. 10 is a schematic diagram of another embodiment of a communication method according to an embodiment of this application;
FIG. 11 is a schematic diagram of another embodiment of a communication method according to an embodiment of this application;
FIG. 12 is a schematic diagram of another embodiment of a communication method according to an embodiment of this application;
FIG. 13 is a schematic structural diagram of a communication apparatus according to an embodiment of this application;
FIG. 14 is another schematic structural diagram of a communication apparatus according to an embodiment of this application;
FIG. 15 is a schematic structural diagram of a terminal device according to an embodiment of this application;
FIG. 16 is a schematic structural diagram of a network device according to an embodiment of this application; and
FIG. 17 is another schematic structural diagram of a network device according to an embodiment of this application.

### DESCRIPTION OF EMBODIMENTS

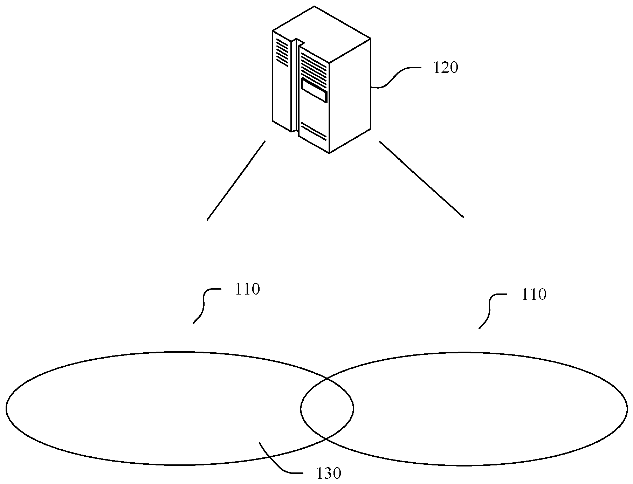

FIG. 1 is a schematic diagram of a communication system according to an embodiment of this application. As shown in FIG. 1, a terminal device 130 accesses a wireless network, to obtain a service from an external network (for example, the internet) over the wireless network or communicate with another terminal device over the wireless network. The wireless network includes a RAN 110 and a core network (CN) 120. The RAN 110 is used to connect the terminal device 130 to the wireless network, and the CN 120 is configured to manage the terminal device and provide a gateway for communicating with the external network.

A terminal device is also referred to as user equipment (user equipment, UE), a mobile station (mobile station, MS), a mobile terminal (mobile terminal, MT), or the like, and is a device that provides voice/data connectivity for a user, for example, a handheld device or a vehicle-mounted device that has a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), or a wireless terminal in a smart home (smart home).

A network device is a device in a wireless network, for example, a radio access network (radio access network, RAN) node that connects the terminal device to the wireless network. Currently, some examples of the RAN node are: a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a base band unit (base band unit, BBU), or a wireless fidelity (wireless fidelity, Wi-Fi) access point (access point, AP). In a network structure, the network device may include a centralized unit (centralized unit, CU) node, a distributed unit (distributed unit, DU) node, or a RAN device that includes a CU node and a DU node.

The term "a plurality of' means two or more, and another quantifier is similar to this. "And/or" describes the association relationship between the associated objects and represents that three relationships may exist. For example, A and/or B may represent the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one (at least one of)..." means one or any combination of subsequent associated objects. For example, "at least one of A, B, and C" includes A, B, C, AB, AC, BC, or ABC.

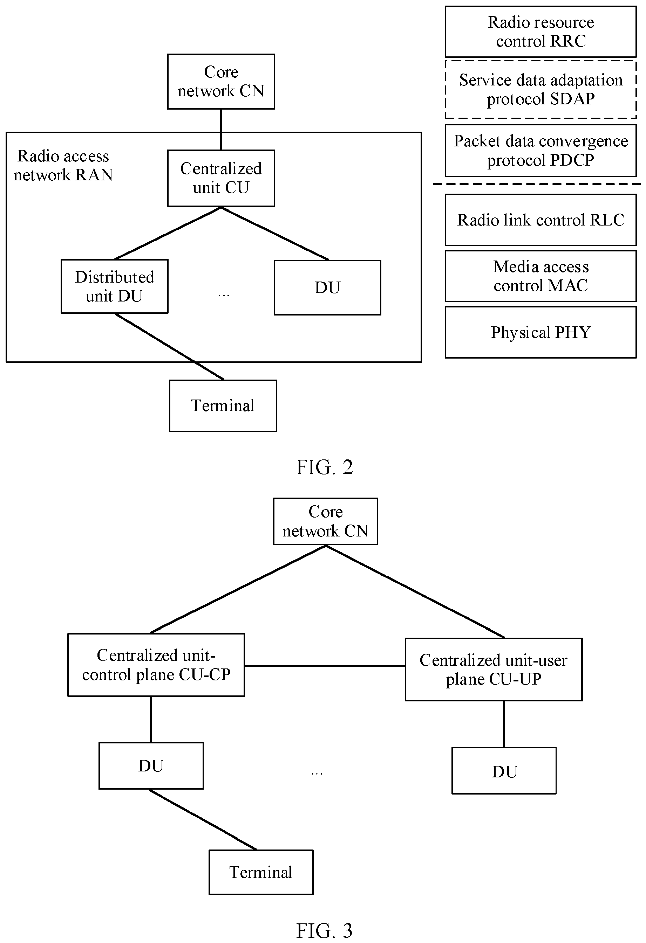

FIG. 2 is a schematic diagram of a network architecture according to an embodiment of this application. As shown in FIG. 2, the network architecture includes a CN device and a RAN device. The RAN device includes a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or a part of the radio frequency apparatus is implemented remotely from the baseband apparatus and a remaining part is integrated into the baseband apparatus. For example, in a long term evolution (Long Term Evolution, LTE) communication system, a RAN device (eNB) includes a baseband apparatus and a radio frequency apparatus. The radio frequency apparatus may be remotely disposed relative to the baseband apparatus. For example, a remote radio unit (remote radio unit, RRU) is remotely disposed relative to a BBU.

Communication between the RAN device and a terminal complies with a specified protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as a PDCP layer, an RLC layer, a MAC layer, and a physical layer. In an implementation, a service data adaptation (service data adaptation protocol, SDAP) layer may be further included on the PDCP layer.

The functions of these protocol layers may be implemented by one node, or may be implemented by a plurality of nodes. For example, in an evolved structure, the RAN device may include a centralized unit (centralized unit, CU) and a distributed unit (distributed unit, DU), and a plurality of DUs may be centrally controlled by one CU. As shown in FIG. 2, the CU and the DU may be divided based on a protocol layer of a wireless network. For example, functions of the PDCP layer and a protocol layer above the PDCP layer are set on the CU, and functions of protocol layers below the PDCP layer, such as the RLC layer and the MAC layer, are set on the DU.

Division based on the protocol layer is merely an example, and division may alternatively be performed based on another protocol layer such as the RLC layer. Functions of the RLC layer and protocol layers above the RLC layer are set on the CU, and functions of protocol layers below the RLC layer are set on the DU. Alternatively, division is performed at a protocol layer. For example, a part of a function of the RLC layer and functions of protocol layers above the RLC layer are set on the CU, and a remaining function of the RLC layer and functions of protocol layers below the RLC layer are set on the DU. In addition, division may alternatively be performed in another manner. For example, division is performed based on a latency. A function whose processing time needs to satisfy a latency requirement is set on the DU, and a function whose processing time does not need to satisfy the latency requirement is set on the CU.

In addition, the radio frequency apparatus may be not placed in the DU but is placed remotely from the DU, or may be integrated into the DU, or a part is placed remotely from the DU and a remaining part is integrated into the DU. This is not limited herein.

Compared with the architecture shown in FIG. 2, further referring to FIG. 3, a control plane (CP) and a user plane (UP) of a CU may be separated and implemented by using different entities, which are respectively a control plane CU entity (CU-CP entity) and a user plane CU entity (CU-UP entity).

In the foregoing network architecture, signaling generated by the CU may be sent to a terminal by using a DU, or signaling generated by a terminal may be sent to the CU by using a DU. The DU may transparently transmit the signaling to the terminal or the CU by directly encapsulating the signaling at a protocol layer without parsing the signaling. In the following embodiments, if transmission of such signaling between the DU and the terminal is involved, that the DU sends or receives the signaling includes this scenario. For example, signaling at an RRC layer or a PDCP layer is finally processed as signaling at a PHY layer and sent to the terminal, or is converted from received signaling at a PHY layer. In the architecture, the signaling at the RRC layer or the PDCP layer may further be considered to be sent by the DU, or sent by the DU and a radio frequency apparatus.

In the foregoing embodiments, the CU is classified as a network device on a RAN side. In addition, the CU may alternatively be classified as a network device on a CN side. This is not limited herein.

An apparatus in the following embodiments of this application may be located in a terminal or a network device based on functions implemented by the apparatus. When the foregoing CU-DU structure is used, the network device may be a CU node, a DU node, or a RAN device that includes a CU node and a DU node.

A terminal device implements uplink synchronization with a network device by using a random access procedure. The random access procedure includes a contention-based random access procedure and a non-contention-based random access procedure. Currently, the contention-based random access procedure includes: The terminal device sends Msg1 to the network device, where Msg1 includes a random access preamble. After detecting the random access preamble, the network device sends Msg2, namely, a RAR message, to the terminal device. The RAR message may carry information such as a random access preamble identifier (random access preamble identifier, RAPID), timing advance (timing advance, TA) information, and an initial uplink grant (initial UL grant). When the RAPID received by the terminal device is the same as an ID of the previously sent random access preamble, the terminal device considers that a response is successful, and performs uplink transmission by using the initial uplink grant in the RAR message, that is, transmits a message based on RAR scheduling. The message transmitted by the terminal device in this step may be referred to as Msg3. After receiving Msg3, the network device determines that contention is resolved, and sends Msg4 to the terminal device, where Msg4 carries information used for contention resolution. After receiving the information used for contention resolution, the terminal device may determine that random access succeeds. It can be learned that in a conventional technology, the terminal device implements contention-based random access by using four steps. A latency of the random access is relatively long, and the random access is not applicable to a scenario with a relatively high latency requirement.

In view of this, embodiments of this application provide a communication method and apparatus, to reduce a latency of random access of a terminal device. In the embodiments of this application, a network device pre-assigns resources to the terminal device. By using the pre-assigned resources, the terminal device not only transmits a random access signal but also transmits information used for contention resolution, so that the random access signal and the information used for contention resolution are transmitted in one step. Then the network device decodes the random access signal and the information used for contention resolution, and notifies, by using a response message, the random access status of the terminal device, to be specific, whether the random access succeeds. In the foregoing procedure, because the terminal device has a pre-assigned resource used to transmit the information used for contention resolution, and the information used for contention resolution and the random access signal are sent in one step, a random access procedure is reduced. Therefore, interaction procedures in the random access procedure are fewer than those in a conventional technology, thereby reducing the latency of the random access of the terminal device.

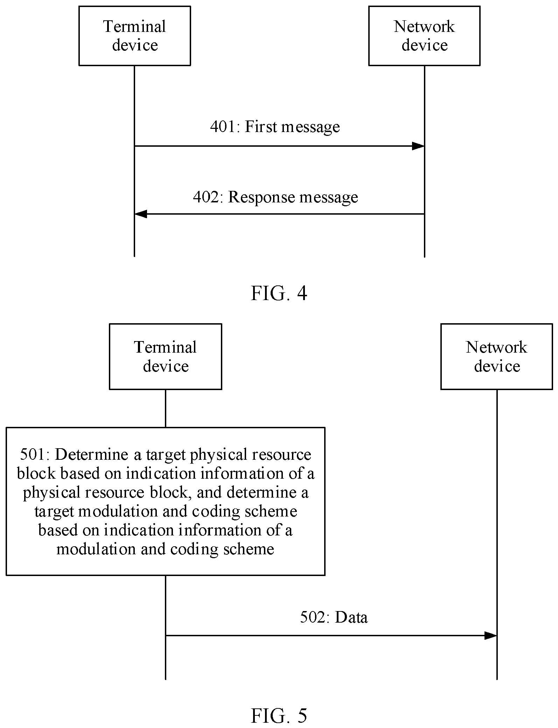

FIG. 4 is a schematic diagram of a communication method according to an embodiment of this application. As shown in FIG. 4, the method includes the following steps.

401: A terminal device sends a first message to a network device.

In a random access procedure, the terminal device may send the first message to the network device. The first message includes a random access signal and information used for contention resolution. The terminal device sends, by using pre-assigned resources, the random access signal and the information used for contention resolution.

The foregoing random access signal includes a random access preamble or a demodulation reference signal DMRS. Optionally, the random access signal may be used by the network device to receive the information used for contention resolution. For example, the network device may determine, based on the random access signal, a transmission boundary of transmitting, by the terminal device, the information used for contention resolution, for example, a location at which the terminal device transmits the information used for contention resolution, for example, a start location and/or an end location of a slot (slot). Then the random access signal may be further used to assist the network device in demodulating the information used for contention resolution.

The information used for contention resolution may be user plane data or control plane data. The information used for contention resolution may include one or more of the following information: an identifier of the terminal device, a random number, and a cause value of random access. The identifier of the terminal device may be an identifier assigned by a RAN, or may be an identifier assigned by a core network, for example, a temporary cell radio network temporary identifier C-RNTI, some bits (bits) of a 5G-S-temporary mobile subscriber identity (5G S-temporary mobile subscriber identity, 5G-S-TMSI) (an identifier, assigned by the core network, of the terminal device), or some bits (bits) of a system architecture evolution temporary mobile subscriber identity (SAE-temporary mobile subscriber identity, S-TMSI) (an identifier, assigned by the core network, of the terminal device). The cause value may include information about a type or a cause of the random access, and may be an RRC message. In addition, content of the information used for contention resolution is related to an event that triggers the random access. For example, Table 1 shows content carried in the information used for contention resolution in different random access scenarios.

**Table 1**

| Random access scenario | Random access event | Content |
|---|---|---|
| Scenario 1 | Initial access | Some bits of an s-TMSI or a random number |
| Scenario 2 | RRC connection reestablishment procedure | C-RNTI and PCI |
| Scenario 3 | Switching | C-RNTI MAC CE |
| Scenario 4 | Uplink/downlink data arrival or uplink out -of-synchronization | C-RNTI MAC CE |
| Scenario 5 | An RRC state is converted to an INACTIVE state | Identity recovery identifier |
| Scenario 6 | Request system information | Identifier of the system information |
| Scenario 7 | Beam failure recovery | C-RNTI MAC CE |

In the scenario 1, the information used for contention resolution includes a connection establishment request, where the connection establishment request includes the some bits of the s-TMSI or the random number. Optionally, if the terminal device has the s-TMSI, the some bits of the s-TMSI are carried. In the scenario 2, the information used for contention resolution includes a connection reestablishment request, where the connection reestablishment request includes the C-RNTI, and optionally, may further include the physical cell identifier (physical cell identifier, PCI). In the scenarios 3 and 4, the information used for contention resolution includes the C-RNTI media access control control element (Media Access Control control element, MAC CE), for example, a MAC CE including a buffer status report (buffer status report, BSR). In the scenario 5, the information used for contention resolution includes a connection recovery request, where the connection recovery request includes the identity recovery identifier, used to identify a context of the terminal. In the scenario 6, the information used for contention resolution includes a system information request, where the system information request includes an identifier of the requested system information. In the scenario 7, the information used for contention resolution includes the C-RNTI media access control control element (Media Access Control control element, MAC CE), for example, a MAC CE including a buffer status report (buffer status report, BSR). Table 1 above is merely an example, and is not used to limit this application.

In this embodiment, the identifier of the terminal device may be all carried in the information used for contention resolution, or may be partially carried in the information used for contention resolution and partially carried in the random access signal. When the identifier of the terminal device is carried in the random access signal, different bit values may be represented by using different sequences or a same sequence but different cyclic shifts.

402: The terminal receives a response message sent by the network device.

After receiving the random access signal and the information used for contention resolution that are sent by the terminal device, the network device decodes the random access signal and the information used for contention resolution, and then sends the response message to the terminal device based on a decoding result. The response message is used to indicate a random access status of the terminal device, and the response message is sent by using a downlink data channel (for example, a physical downlink shared channel (physical downlink shared channel, PDSCH).

When the network device determines that contention is resolved, the network device sends the response message. The response message is used to indicate that the random access succeeds or indicate that the contention is resolved. For example, the response message includes a contention resolution identifier. The contention resolution identifier is used to indicate that the contention is resolved or used to indicate that the random access succeeds. The contention resolution identifier is obtained based on the information used for contention resolution. For example, the contention resolution identifier is the information used for contention resolution or a truncated part of the information. For another example, there is a correspondence between the contention resolution identifier and the information used for contention resolution, and the contention resolution identifier is obtained based on the correspondence. In addition, that the response message includes the contention resolution identifier may mean that the response message directly carries the contention resolution identifier, or may mean that the response message indirectly includes the contention resolution identifier, for example, the response message is scrambled by using the contention resolution identifier.

Optionally, when the contention resolution identifier is a part of the content of the information used for contention resolution, the terminal device may determine length information of the contention resolution identifier based on indication information fed back by the network device. For example, a length of the contention resolution identifier may be 16 bits or 48 bits. Then the terminal device obtains the contention resolution identifier based on the length information of the contention resolution identifier, and determines, based on the contention resolution identifier, that the random access succeeds and the contention is resolved. The indication information may be carried in the response message, or may exist in another message. This is not specifically limited herein.

Optionally, when the length, included in the indication information, of the contention resolution identifier is a fixed length such as 48 bits, if a length of the identifier, carried in the information used for contention resolution, of the terminal device is less than the fixed length, for example, 16 bits, the terminal device uses bits other than the 16 bits as padding bits. When receiving the contention resolution identifier, the terminal device compares the first 16 bits of the contention resolution identifier with the information used for contention resolution to determine whether the contention is resolved. If content of the first 16 bits of the contention resolution identifier is consistent with the identifier of the terminal device in the information used for contention resolution, the terminal device may determine that the contention is resolved. In this possible implementation, the indication information is carried in the response message or in a media access control (Media access control, MAC) subheader of the response message.

Optionally, the response message may further include one or a combination of the following: a temporary cell radio network temporary identifier (temporary cell radio network temporary identifier), indication information of a timing advance, uplink grant information, downlink assignment information, and indication information of a HARQ feedback. The temporary cell radio network temporary identifier is used to identify the terminal device in the random access procedure. The indication information of the timing advance is used by the terminal device to determine a start time point of uplink data transmission.

Optionally, the uplink grant information may be downlink control information scrambled by using a C-RNTI of the terminal device, and is used to assign an uplink resource. The uplink grant information is sent by using a downlink control channel (for example, a PDCCH). The uplink grant information may include at least one of the following information: indication information of a physical resource block, indication information of a modulation and coding scheme, a HARQ process identifier, indication information of new transmission, and indication information of a redundancy version of data.

Optionally, the downlink assignment information may be downlink control information scrambled by using the C-RNTI of the terminal device, and is used to assign a downlink resource. The downlink assignment information is sent by using a downlink control channel (for example, a physical downlink control channel (physical downlink control channel, PDCCH), and the downlink assignment information includes at least one of the following information: indication information of a physical resource block, indication information of a modulation and coding scheme, a HARQ process identifier, indication information of new transmission, and indication information of a redundancy version of data. The indication information of the HARQ feedback is used to indicate a feedback of the terminal device on a receiving status of the response message.

The following describes in detail, by using different embodiments, that a response message includes different information, as shown below.

Implementation 1: The response message is used to indicate new transmission, the response message includes uplink grant information, and the uplink grant information includes indication information of a physical resource block and indication information of a modulation and coding scheme. The new transmission (new transmission) is initial transmission, and is the first time of transmission. As shown in FIG. 5, a specific process in which a terminal device performs new transmission of data includes the following steps.

501: The terminal device determines a target physical resource block based on the indication information of the physical resource block, and determines a target modulation and coding scheme based on the indication information of the modulation and coding scheme.

The terminal device may determine the target physical resource block based on the indication information, carried in the response message, of the physical resource block, and determine the target modulation and coding scheme based on the indication information, carried in the response message, of the modulation and coding scheme.

502: The terminal device sends the data to a network device.

The terminal device newly transmits the data to the network device on the target physical resource block by using the target modulation and coding scheme. The data may be service data transmitted by the terminal device to the network device.

It should be noted that the response message may be used to indicate the new transmission in a direct or indirect manner. The following uses examples for description.
1. Direct indication manner: The terminal device may receive indication information sent by the network device, where the indication information is used to indicate the new transmission. In this way, the terminal device may perform the new transmission based on the indication information. The indication information may be carried in the response message, or may be carried in another message. This is not specifically limited herein.
2. Indirect indication manner:
   a. The response message includes indication information of the new transmission, where the indication information of the new transmission may be a contention resolution identifier, and indicates the terminal device to perform the new transmission. Alternatively, the indication information of the new transmission may be a first RNTI of the terminal device, and the response message is scrambled by using the first RNTI, to indicate the terminal device to perform the new transmission. A calculation rule of the first RNTI is pre-stipulated in a protocol. For example, the network device may determine the first RNTI based on a resource used by the terminal device to transmit a random access signal.
   b. A parameter of the response message. The parameter may include an information element format of the response message or a quantity of the response messages. When the information element format of the response message received by the terminal device is a first information element format, the response message indicates the terminal device to perform the new transmission. For example, the first information element format may be that the response message includes the contention resolution identifier and the uplink grant information. Alternatively, when the quantity of response messages received by the terminal device is a first preset quantity, to be specific, when a quantity of response messages that are received by the terminal device and that have completely the same content is the first preset quantity, the response message indicates the terminal device to perform the new transmission.

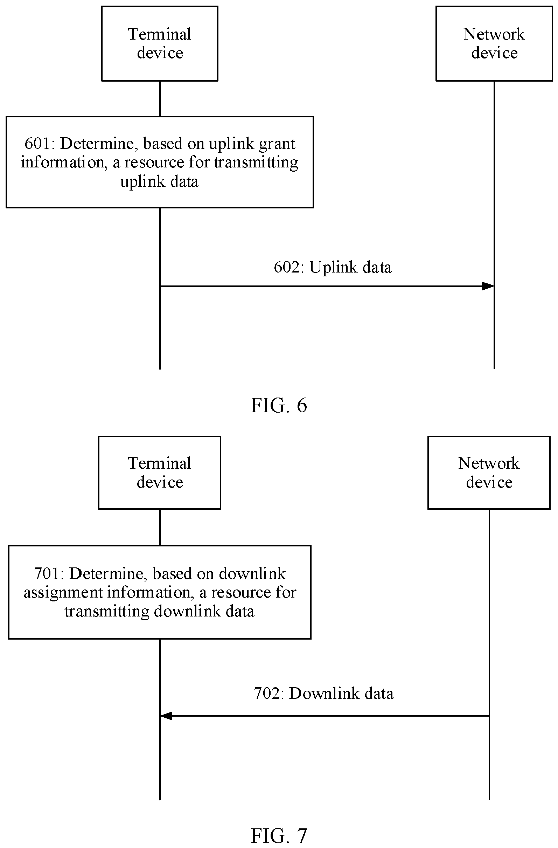

Implementation 2: The response message includes uplink grant information, and the uplink grant information includes a resource assigned in an uplink. As shown in FIG. 6, a terminal device performs the following steps based on the uplink grant information.

601: The terminal device determines, based on the uplink grant information, a resource for transmitting uplink data.

The terminal device parses the uplink grant information, and determines an uplink resource assigned by a network device.

602: The terminal device sends the uplink data to the network device.

The terminal device transmits the uplink data to the network device by using the resource.

Implementation 3: The response message includes downlink assignment information, and the downlink assignment information includes information about a resource assigned in a downlink. As shown in FIG. 7, a terminal device performs the following steps based on the downlink assignment information.

701: The terminal device determines, based on the downlink assignment information, a resource for receiving downlink data.

The terminal device parses the downlink assignment information, and determines a downlink resource used by a network device to send the downlink data to the terminal device.

702: The terminal device receives the downlink data sent by the network device.

After determining the downlink resource, the terminal device may monitor a channel by using the downlink resource, and receive the downlink data sent by the network device.

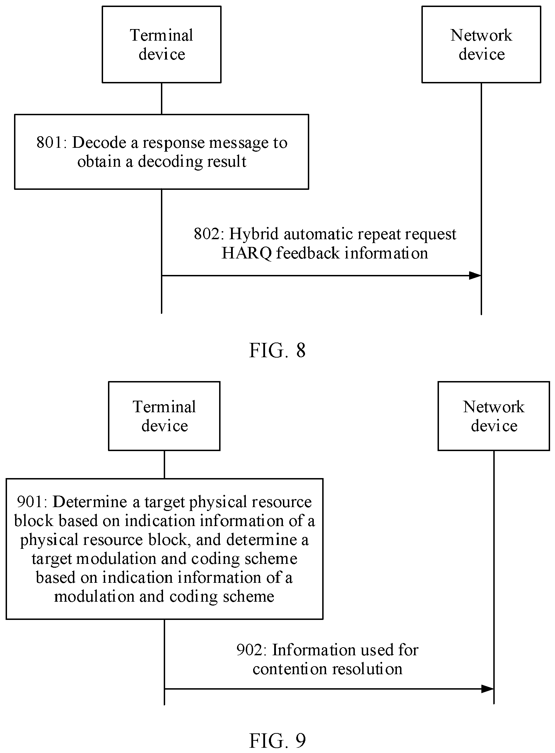

Implementation 4: The response message includes indication information of a HARQ feedback. As shown in FIG. 8, a terminal device performs the following steps.

801: The terminal device decodes the response message to obtain a decoding result.

After receiving the response message sent by a network device, the terminal device may decode the response message to obtain the decoding result. For example, the network device sends a plurality of response messages of the terminal device in a same MAC protocol data unit (protocol data unit, MAC PDU), then the terminal device needs to determine a target response message in the plurality of response messages, where the target response message is the response message sent by the network device to the terminal device in step 402, and then the terminal device decodes the response message.

802: The terminal device sends HARQ feedback information to the network device based on the decoding result.

After decoding the response message, the terminal device may determine that the response message carries the indication information of the HARQ feedback. The indication information of the HARQ feedback is used to indicate the terminal device to feed back the decoding result of the response message to the network device after decoding the response message. When the terminal device successfully decodes the response message, the terminal device sends HARQ acknowledgment (acknowledgement, ACK) feedback information to the network device. When the terminal device fails to decode the response message, the terminal device sends HARQ NACK feedback information to the network device. The terminal device sends the HARQ feedback information by using a physical uplink control channel (physical uplink control channel, PUCCH).

Implementation 5: The response message is used to indicate retransmission, the response message includes uplink grant information, and the uplink grant information includes indication information of a physical resource block and indication information of a modulation and coding scheme. As shown in FIG. 9, a specific process in which a terminal device retransmitsinformation used for contention resolution includes the following steps.

901: The terminal device determines a target physical resource block based on the indication information of the physical resource block, and determines a target modulation and coding scheme based on the indication information of the modulation and coding scheme.

Step 901 is similar to step 501 in FIG. 5. Details are not described herein again.

902: The terminal device retransmits the information used for contention resolution to a network device.

The terminal device retransmits the information used for contention resolution to the network device on the target resource block by using the target modulation and coding scheme.

It should be noted that the response message may be used to indicate the retransmission in a direct or indirect manner. The following uses examples for description.

1. Direct indication manner: The terminal device may receive indication information sent by the network device, where the indication information indicates the retransmission. In this way, the terminal device may perform the retransmission based on the indication information. The indication information may be carried in the response message or another message. This is not specifically limited.

2. Indirect indication manner:
a. The response message includes indication information of the retransmission, where the indication information of the retransmission may be that the response message does not carry a contention resolution identifier, and indicates the terminal device to perform the retransmission. Alternatively, the indication information of the retransmission may be a second RNTI of the terminal device, and the response message is scrambled by using the second RNTI, to indicate the terminal device to perform the retransmission. A calculation rule of the second RNTI is pre-stipulated in a protocol. For example, the network device may determine the second RNTI based on a resource for transmitting a random access signal.
b. A parameter of the response message. The parameter may include an information element format of the response message or a quantity of the response messages. When the information element format of the response message received by the terminal device is a second information element format, the response message indicates the terminal device to perform the retransmission. For example, the second information element format may be that the response message includes the uplink grant information and indication information of a timing advance. Alternatively, when the quantity of response messages received by the terminal device is a second preset quantity, to be specific, when a quantity of response messages that are received by the terminal device and that have completely the same content is the second preset quantity, the response message indicates the terminal device to perform the retransmission.

In the embodiments, for the response message, there may be a plurality of feedback manners of the network device. For example, the response message sent by the network device to the terminal device is one message. Alternatively, the response message fed back by the network device to the terminal device includes a first message and a second message. The following describes the two possible implementations.

First feedback manner:
1. When the network device successfully decodes the random access signal and the information used for contention resolution, or the network device successfully decodes the information used for contention resolution, the response message is used to indicate that the random access succeeds or indicate that the contention is resolved. For example, the response message may include the contention resolution identifier. Optionally, the response message may include one or a combination of the following: the temporary cell radio network temporary identifier, indication information of the timing advance, the uplink grant information, the downlink assignment information, and the indication information of the HARQ feedback.
2. When the network device fails to decode the information used for contention resolution and successfully decodes the random access signal, the response message may include the temporary cell radio network temporary identifier, the indication information of the timing advance, the uplink grant information, or the indication information of the HARQ feedback.

Second feedback manner:
1. When the network device successfully decodes the random access signal and the information used for contention resolution, or the network device successfully decodes the information used for contention resolution, the first message may include information indicating that the contention resolution identifier exists. The second message may include the contention resolution identifier. Optionally, the first message may further include one or a combination of the following: the temporary cell radio network temporary identifier, the indication information of the timing advance, the uplink grant information, the downlink assignment information, and the indication information of the HARQ feedback. Alternatively, the second message may include one or a combination of the following: the temporary cell radio network temporary identifier, the indication information of the timing advance, the uplink grant information, the downlink assignment information, and the indication information of the HARQ feedback. It should be noted that when the message includes a plurality of pieces of information, the first message may carry a part of the information, and the second message may carry a remaining part of the information.
2. When the network device fails to decode the information used for contention resolution and successfully decodes the random access signal, the first message may include information indicating that no contention resolution identifier exists. In this case, the network device does not deliver the second message. That is, there is no second message. Optionally, the first message may further include one or a combination of the following: the temporary cell radio network temporary identifier, the indication information of the timing advance, and the uplink grant information. In the second feedback manner, the first message carries information indicating whether the contention resolution identifier exists, and the terminal device determines, based on the first message, whether downlink control information needs to be monitored, to receive the contention resolution identifier sent by the network device.

In a possible implementation, when the terminal device receives the first message sent by the network device, and the first message carries the information indicating that the contention resolution identifier exists, the terminal device may start a timer, and receive, within duration set on the timer, the contention resolution identifier sent by the network device. If the terminal device does not receive, within the duration set on the timer, the contention resolution identifier sent by the network device, the terminal device retransmits the information used for contention resolution to the network device.

In the embodiments, after the terminal device receives the response message sent by the network device, when any one of the following conditions is met, the terminal device may determine that the random access succeeds. The conditions are listed one by one below.
1. If the random access requested by the terminal device is non-contention-based random access, when any one of the following conditions is met, the terminal device may determine that the random access succeeds.
   a. The response message includes the uplink grant information, and the uplink grant information is transmitted by using the downlink control channel, and is used to assign the uplink resource for the new transmission or the retransmission.
   b. The response message includes the downlink assignment information. The downlink assignment information is transmitted by using the downlink control channel, and is used to assign the downlink resource.
   c. The terminal device receives a HARQ ACK indication message that is sent by the network device and that is for the information used for contention resolution. The HARQ ACK indication message indicates that the network device successfully decodes the information used for contention resolution.
2. If the random access requested by the terminal device is contention-based random access, when any one of the following conditions is met, the terminal device may determine that the random access succeeds.
   a. The response message includes the uplink grant information, and the uplink grant information is transmitted by using the downlink control channel, and is used to indicate the new transmission.
   b. The response message includes the downlink assignment information. The downlink assignment information is transmitted by using the downlink control channel, and is used to assign the downlink resource.
   c. The terminal device receives a HARQ ACK indication message that is sent by the network device and that is for the information used for contention resolution. The HARQ ACK indication message indicates that the network device successfully decodes the information used for contention resolution.
   d. The terminal device receives the contention resolution identifier sent by the network device.

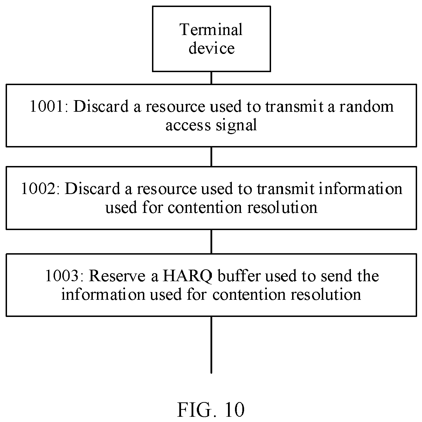

After the terminal device determines that the random access succeeds, the terminal device may perform one or more of the following operations. Referring to FIG. 10:
1001: The terminal device discards the resource used to transmit the random access signal.

After the terminal device determines that the random access succeeds, the terminal device may discard the resource used to transmit the random access signal. The resource is a resource used to transmit the random access signal in a solution in which the terminal device implements the random access through two-step random access (random access) in the embodiments of this application. For example, when the random access signal is a preamble, the resource that is used to transmit the random access signal and that is discarded by the terminal device includes a time domain resource of the preamble, a frequency domain resource of the preamble, and the preamble. It should be noted that the discarded resource used to transmit the random access signal does not include a non-contention-based random access resource used for beam failure recovery in a beam failure recovery scenario. In this way, when a beam failure occurs subsequently, the terminal device may further perform the beam failure recovery by using the non-contention-based random access resource. Then when the random access signal is the DMRS, the resource that is used to transmit the random access signal and that is discarded by the terminal device may include a time domain resource of the DMRS, a frequency domain resource of the DMRS, and the DMRS.

1002: The terminal device discards a resource used to transmit the information used for contention resolution.

The terminal device may further discard the resource used to transmit the information used for contention resolution. The resource is a resource used to transmit the information used for contention resolution in the solution in which the terminal device implements the random access through two-step random access (random access) in the embodiments of this application, for example, a modulation and coding scheme and a time-frequency resource that are used by the terminal device to transmit the information used for contention resolution. It should be noted that the discarded resource used to transmit the information used for contention resolution does not include a random access resource used for the beam failure recovery and data transmission in the beam failure recovery scenario.

1003: The terminal device reserves a HARQ buffer (buffer) used to send the information used for contention resolution.

If the random access initiated by the terminal device is non-contention-based two-step random access, the terminal device does not clear (or reserve) the HARQ buffer used to send the information used for contention resolution. Therefore, when the network device fails to receive the information used for contention resolution, the terminal device may retransmit the information used for contention resolution.

In the embodiments of this application, the network device pre-assigns resources to the terminal device. By using the pre-assigned resources, the terminal device not only transmits the random access signal but also transmits the information used for contention resolution, so that the random access signal and the information used for contention resolution are transmitted in one step. Then the network device decodes the random access signal and the information used for contention resolution, and notifies, by using the response message, the random access status of the terminal device, to be specific, whether the random access succeeds. In the foregoing procedure, because the terminal device has a pre-assigned resource used to transmit the information used for contention resolution, and the information used for contention resolution and the random access signal are sent in one step, the random access procedure is reduced. Therefore, interaction procedures in the random access procedure are fewer than those in a conventional technology, thereby reducing a latency of the random access of the terminal device.

In the embodiments of this application, the network device may configure, for the terminal device by using configuration information, a first resource used to transmit the random access signal and a second resource used to transmit the information used for contention resolution. In addition, configuration information for configuring the first resource and configuration information for configuring the second resource may be located in a same configuration message, or may be located in different configuration messages. In addition, a correspondence between the configuration information of the first resource and the configuration information of the second resource may be set, and target configuration information is indicated to the terminal device. The target configuration information is the configuration information of the first resource that the network device indicates the terminal device to use or the configuration information of the second resource that the network device indicates the terminal device to use. When the target configuration information is the configuration information of the first resource, the terminal device may determine the configuration information of the to-be-used second resource based on the target configuration information and the foregoing correspondence. Further, the terminal device determines the first resource and the second resource based on the configuration information of the to-be-used first resource and the configuration information of the to-be-used second resource, and sends, by using the first resource and the second resource, the random access signal and the information used for contention resolution. When the target configuration information is the configuration information of the second resource, the terminal device may determine the configuration information of the to-be-used first resource based on the target configuration information and the foregoing correspondence. Further, the terminal device determines the first resource and the second resource based on the configuration information of the to-be-used first resource and the configuration information of the to-be-used second resource, and sends, by using the first resource and the second resource, the random access signal and the information used for contention resolution. The foregoing correspondence may be sent by the network device to the terminal device, or may be preconfigured in the terminal device.

It can be learned that in different resource configuration manners, the terminal device may obtain, in different manners, the resource used to transmit the random access signal and the resource used to transmit the information used for contention resolution. For differentiation, the resources are respectively referred to as the first resource and the second resource. In addition, the configuration information of the first resource and the configuration information of the second resource are respectively referred to as first configuration information and second configuration information. The following provides specific description by using examples.

Manner 1: The terminal device may determine, based on the first configuration information and the second configuration information that are sent by the network device, the first resource for transmitting the random access signal and the second resource for transmitting the information used for contention resolution.

Manner 2: The terminal device may determine, by using the correspondence between the first configuration information and the second configuration information and indication information, the first resource for transmitting the random access signal and the second resource for transmitting the information used for contention resolution, where the indication information is used to indicate target first configuration information or target second configuration information. The correspondence reflects one or more second configurations corresponding to one or more first configurations, or the correspondence system reflects one or more first configurations corresponding to one or more second configurations. For example, the correspondence includes one or more groups of configurations, each group of configurations includes the first configuration and the second configuration, and there is the correspondence between the first configuration and the second configuration in each group. Target configuration information indicated by the indication information is information about one first configuration or one second configuration in the correspondence. In other words, the indication information is used to indicate a target configuration, for example, a target first configuration and a target second configuration.

The foregoing manners are described below with reference to specific embodiments.

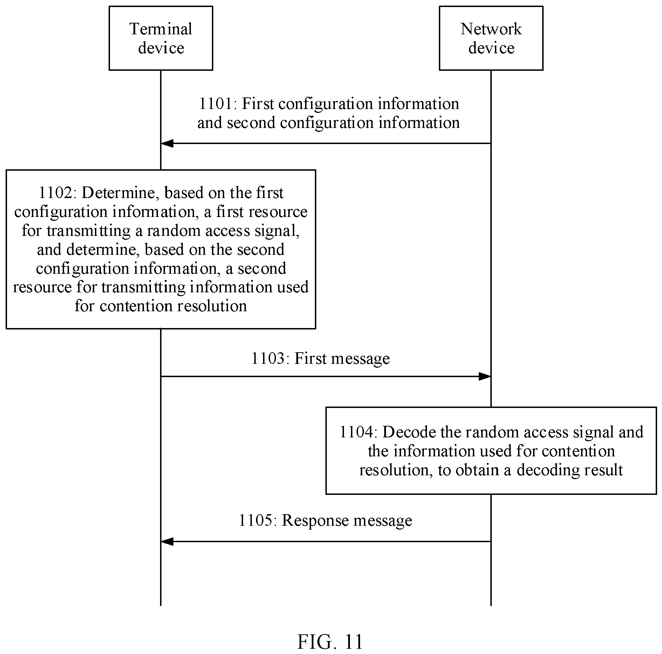

FIG. 11 is a schematic diagram of a communication method according to an embodiment of this application. In the figure, a resource for sending a random access signal and a resource for sending information used for contention resolution in a random access procedure is determined in the foregoing manner 1. As shown in FIG. 11, the method includes the following steps.

1101: A network device sends first configuration information and second configuration information to a terminal device.

The first configuration information is used to configure the resource for transmitting the random access signal, and the second configuration information is used to configure the resource for transmitting the information used for contention resolution.

In this embodiment, the first configuration information and the second configuration information may be sent by the network device to the terminal device by using system information or dedicated signaling. This is not specifically limited in this application. Alternatively, the network device may send the first configuration information and the second configuration information to the terminal device in a broadcast or unicast manner. This is not specifically limited in this application.

The first configuration information may include indication information of a time domain resource, and the first configuration information may further include at least one of the following information: indication information of a frequency domain resource, a preamble index, a root sequence, indication information of a maximum quantity of transmission times of a preamble, indication information of a receive window of a response to a first message, indication information of a transmit power ramping step of the preamble, indication information of a subcarrier spacing (subcarrier spacing, SCS) of the preamble, indication information of a scaling factor of a backoff indication, and indication information of a quantity of repetitions of the preamble. The preamble index is used to assign a resource to the preamble, and the root sequence is used to generate the preamble. The indication information of the maximum quantity of transmission times of the preamble is used by the terminal device to determine, if contention has not been resolved when a quantity of times that the terminal device transmits the preamble in a random access procedure to request the random access reaches the maximum quantity of transmission times, that random access fails. The indication information of the receive window of the response to the first message is used to indicate waiting duration for receiving, by the terminal device, a response message sent by the network device. The indication information of the transmit power ramping step of the preamble is used to indicate a power increment for sending the preamble each time when the terminal device transmits the preamble for a plurality of times in a random access procedure to request random access. The indication information of the scaling factor of the backoff indication is used by the terminal device to determine latency time before random access is completed and before the preamble is retransmitted. For example, if latency time indicated by a network is 200 ms, the terminal device randomly selects a value A from 0 to 200 ms, and the latency time of the terminal device is A*scaling factor, where a range of the scaling factor is 0 to 1. The indication information of the quantity of repetitions of the preamble is used to indicate a quantity of times that the terminal device repeatedly sends a same preamble, to increase coverage of the preamble. A part of the foregoing information may exist in a preset manner, and may not be carried in the first configuration information.

The second configuration information may include at least one of the following information: indication information of a modulation and coding scheme MCS, indication information of an MCS table, indication information of a resource for transmitting the information used for contention resolution, indication information of a transport block size (transport block size, TBS), indication information of a redundancy version (redundancy version, RV) of data, indication information of a HARQ process identifier ID, indication information of new transmission or retransmission, indication information of a subcarrier spacing SCS of a data resource, information indicating whether precoding is performed, indication information of a quantity of repetitions, information indicating a quantity of repetitions that need to be performed, indication information of a demodulation reference signal DMRS mapping type, indication information of frequency hopping, indication information of a maximum rank, indication information of allowing piggybacking of channel state information (channel stateinformation, CSI), cell index information, and index information of a bandwidth part (bandwidth part, BWP).

The indication information of the MCS may be information about an MCS index, and each MCS index corresponds to a group of parameters. For example, each index corresponds to a group of a modulation rule, a transport block size, a physical transmission rate, and the like. The indication information of the MCS table may be identification information of the MCS table, for example, an index of the MCS table. The network device may pre-configure, on the terminal device, a correspondence between the MCS table and an impact parameter that impacts the physical transmission rate. One MCS table includes at least one MCS index, and each index corresponds to one group of parameters, for example, the modulation rule, the transport block size, and the physical transmission rate. For example, the following Table 2 is a possible form of the MCS table.

**Table 2**

| MCS index | Modulation rule | Index of a transport block size TBS |
|---|---|---|
| 0 | 2 | 0 |
| 1 | 2 | 1 |
| 2 | 2 | 2 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 4 | 9 |
| 11 | 4 | 10 |
| 12 | 4 | 11 |
| 13 | 4 | 12 |
| 14 | 4 | 13 |
| 15 | 4 | 14 |
| 16 | 4 | 15 |
| 17 | 6 | 15 |
| 18 | 6 | 16 |
| 19 | 6 | 17 |
| 20 | 6 | 18 |
| 21 | 6 | 19 |
| 22 | 6 | 20 |
| 23 | 6 | 21 |
| 24 | 6 | 22 |
| 25 | 6 | 23 |
| 26 | 6 | 24 |
| 27 | 6 | 25 |
| 28 | 6 | 26 |
| 29 | 2 | Reserved |
| 30 | 4 | |
| 31 | 6 | |

The indication information of a resource for transmitting the information used for contention resolution includes indication information of a time domain resource and/or indication information of a frequency domain resource. The indication information of the TBS indicates a size of a TB, and the indication information of the TBS may be the index of the TBS.

The indication information of the RV is used to indicate an RV of the to-be-transmitted information used for contention resolution, and the indication information of the RV may be an index of the RV The terminal device may send uplink data based on the RV indicated by the indication information of the RV, and the network device side decodes, based on the indication information of the RV, the uplink data uploaded by the terminal device.

Indication information of a HARQ process identifier is information used to indicate the HARQ process, and the indication information of the HARQ process identifier may be an index of the HARQ process. The terminal device may send the uplink data by using the HARQ process indicated by the indication information of the HARQ process identifier, and the network device receives the uplink data sent by the terminal device in the HARQ process.

An indication information of the new transmission or the retransmission is used to indicate whether the uplink data is newly transmitted data or retransmitted data, and the indication information of the new transmission or the retransmission may be two different values of one bit. For example, when a value of the bit is 1, the value is indication information of the new transmission; or when a value of the bit is 0, the value is indication information of the retransmission.

The indication information of the SCS may be an index of the SCS. The terminal device may send the uplink data by using the SCS indicated by the indication information of the SCS, and the network device receives the uplink data by using the SCS.

The indication information of the precoding is used to indicate information about a precoding manner, and may be values of several bits. Different values of the several bits represent different precoding modes. The terminal device precodes the uplink data based on the precoding manner indicated by the precoding indication information. In this case, the network device correspondingly decodes the uplink data in the precoding manner.

The indication information of the quantity of times of repeated sending is used to indicate information about a quantity of times of repeatedly sending data, and may be values of several bits. Different values of the several bits represent different quantities of times of repeated sending. The terminal device may send the uplink data to the network device based on the indication information of the quantity of times of repeated sending, and the network device side may determine, based on the indication information of the quantity of repetitions, which received data is repeated data, and perform soft combination processing.

The indication information indicating that repeated sending is needed is used to indicate the terminal device to repeatedly send the uplink data.

The indication information of the DMRS mapping type is used to indicate the DMRS mapping type, and the indication information of the DMRS mapping type may be an index of the DMRS mapping type. Different DMRS mapping types correspond to different resource elements. For example, a DMRS location corresponding to a DMRS mapping type 1 is at a symbol 0, and a DMRS location corresponding to a DMRS mapping type 2 is at a symbol 5. The terminal device may map, by using the DMRS mapping type indicated by the indication information of the DMRS mapping type, a DMRS corresponding to the uplink data, and the network device side may detect the DMRS by using the DMRS mapping type indicated by the indication information of the DMRS mapping type.

The indication information of frequency hopping transmission is used to indicate whether the terminal device performs frequency hopping transmission on the uplink data. The indication information of the frequency hopping transmission may be indicated by using two different values of one bit. For example, when a value of the bit is 1, it indicates frequency hopping transmission; or when a value of the bit is 0, it indicates no frequency hopping transmission.

The indication information of piggybacking the CSI is used to indicate information about whether to multiplex a time-frequency resource for sending the uplink data to send the CSI, and whether to piggyback the CSI may be indicated by using one bit. When a value of the bit is 1, it indicates that the CSI is piggybacked; or when a value of the bit is 0, it indicates that the CSI is not piggybacked.

Indication information of a power offset is used to indicate a power offset between the uplink data and the preamble and/or a power offset associated with an uplink configuration. The terminal device side may determine a transmit power of the uplink data based on the power offset indicated by the indication information of the power offset.

The cell index information is information about a cell to which the time-frequency resource of the uplink data belongs. The terminal device may send the uplink data by using the time-frequency resource of the uplink data in the cell corresponding to the cell index, and the network device receives the uplink data in the cell by using the time-frequency resource.

The index information of the BWP is information about a BWP to which the time-frequency resource of the uplink data belongs. The terminal device may send the uplink data by using the time-frequency resource of the uplink data in the BWP indicated by the index information of the BWP, and the network device side receives the uplink data by using the time-frequency resource in the BWP.

1102: The terminal device determines, based on the first configuration information, a first resource for transmitting the random access signal, and determines, based on the second configuration information, a second resource for transmitting the information used for contention resolution.

The terminal device may determine target first configuration information of the random access signal in the first configuration information, and then determine, based on the target first configuration information, the first resource for transmitting the random access signal. For the second resource of the information used for contention resolution, the terminal device may determine corresponding target second configuration information in the second configuration information based on the target first configuration information, and then determine, based on the target second configuration information, the second resource for transmitting the information used for contention resolution. That the terminal device determines the target first configuration information may be specifically: determining to use corresponding target first configuration information based on an amount of to-be-transmitted data. The amount of the to-be-transmitted data is an amount of data buffered in a buffer of the terminal device, and the information used for contention resolution may be some or all of the to-be-transmitted data. For example, if the volume of the to-be-transmitted data is 100 bytes, the terminal device may determine configuration information that is of the random access signal and that corresponds to the data volume of 100 bytes, to be specific, when the terminal device needs to transmit 100-byte data, which preamble is correspondingly used by the terminal device, which time-frequency resource is used by the terminal device to transmit the preamble, and so on. A correspondence between a data volume and the first configuration information is carried in the first configuration information, and each piece of configuration information in the first configuration information has a corresponding data volume. The terminal device may select, from the second configuration information based on the data volume corresponding to the target first configuration information, the target second configuration information corresponding to the data volume. The target second configuration information may be specifically the modulation and coding scheme MCS for transmitting the information used for contention resolution, the transport block TB size, and the like. A correspondence between the data amount and the second configuration information is carried in the second configuration information.

It should be noted that there is a correspondence between the first configuration information and the second configuration information. The correspondence may be directly reflected in the first configuration information and the second configuration information. Alternatively, after the network device delivers the first configuration information and the second configuration information to the terminal device, the network device may further need to deliver the correspondence between the first configuration information and the second configuration information to the terminal device. For example, the correspondence may be a mapping table in a form of a table. This is not specifically limited in this application. The correspondence between the first configuration information and the second configuration information may be reflected as that the random access signal is transmitted by using a time-frequency resource, and the information used for contention resolution is transmitted by using the second resource that corresponds to a set of target second configuration information and that corresponds to the time-frequency resource.

In this embodiment, the terminal device may alternatively first determine, in the second configuration information, the target second configuration information of the information used for contention resolution, then determine the target first configuration information of the random access signal in the first configuration information based on the target second configuration information, and then determine, based on the target first configuration information, the first resource for transmitting the random access signal and determine, based on the target second configuration information, the second resource for transmitting the information used for contention resolution. This is not specifically limited in this application. That the terminal device determines the target second configuration information may be specifically determining, based on the volume of the to-be-transmitted data, to use the target second configuration information. The amount of the to-be-transmitted data is the amount of the data buffered in the buffer of the terminal device, and the information used for contention resolution may be some or all of the data in the volume of the to-be-transmitted data. For example, if the data volume is 100 bytes, the terminal device may determine the target second configuration information corresponding to the data volume of 100 bytes. The target second configuration information may be specifically the modulation and coding scheme MCS for transmitting the information used for contention resolution, the transport block TB size, or the like. The correspondence between the data amount and the second configuration information is carried in the second configuration information. Each piece of configuration information in the second configuration information has a corresponding data amount, and the used MCS and the TB size determine a size that is of a resource for transmission and that can be configured by using the configuration information. Then the terminal device determines the target second configuration information, and the terminal device may determine a resource size supported by the target second configuration information, that is, a volume of transmitted data. For the data volume, the terminal device may determine, in the first configuration information, the target first configuration information that is of the random access signal and that corresponds to the data volume. There is a correspondence between each piece of configuration information in the first configuration information and the data volume, and the correspondence is carried in the first configuration information.

1103: The terminal device sends the first message to the network device.

The terminal device may send the first message to the network device, where the first message includes the random access signal and the information used for contention resolution. The terminal device transmits the random access signal to the network device by using the first resource, and transmits the information used for contention resolution to the network device by using the second resource.

In this embodiment, a relationship between the first resource and the second resource may be as follows: 1. There is an overlapping area in time domain, and there is no overlapping area in frequency domain. 2. There is no overlapping area in time domain, and there is an overlapping area in frequency domain. 3. There is no overlapping area in neither time domain nor frequency domain.

Step 1103 is similar to step 401 in FIG. 4. For details, refer to the specific description in step 401 in FIG. 4. Details are not described herein again.

1104: The network device decodes the random access signal and the information used for contention resolution, to obtain a decoding result.

The network device may decode the random access signal and the information used for contention resolution, to obtain the decoding result.

1105: The terminal receives the response message sent by the network device.

Step 1105 is similar to step 402 in FIG. 4. For details, refer to the specific description in step 402 in FIG. 4. Details are not described herein again.

In this embodiment of this application, the terminal device receives the first configuration information and the second configuration information that are sent by the network device. Then the terminal device determines, based on the first configuration information, the first resource for transmitting the random access signal, and determines, based on the second configuration information, the second resource for transmitting the information used for contention resolution. The terminal device sends the first message to the network device. The first message includes the random access signal and the information used for contention resolution. The random access signal is transmitted by using the first resource, and the information used for contention resolution is transmitted by using the second resource. Then the network device decodes the random access signal and the information used for contention resolution, and notifies, by using the response message, the random access status of the terminal device, to be specific, whether the random access succeeds. In the foregoing procedure, because the terminal device has the pre-assigned second resource used to transmit the information used for contention resolution, and the information used for contention resolution and the random access signal are sent in one step, the random access procedure is reduced. Therefore, interaction procedures in the random access procedure are fewer than those in a conventional technology, thereby reducing a latency of the random access of the terminal device.

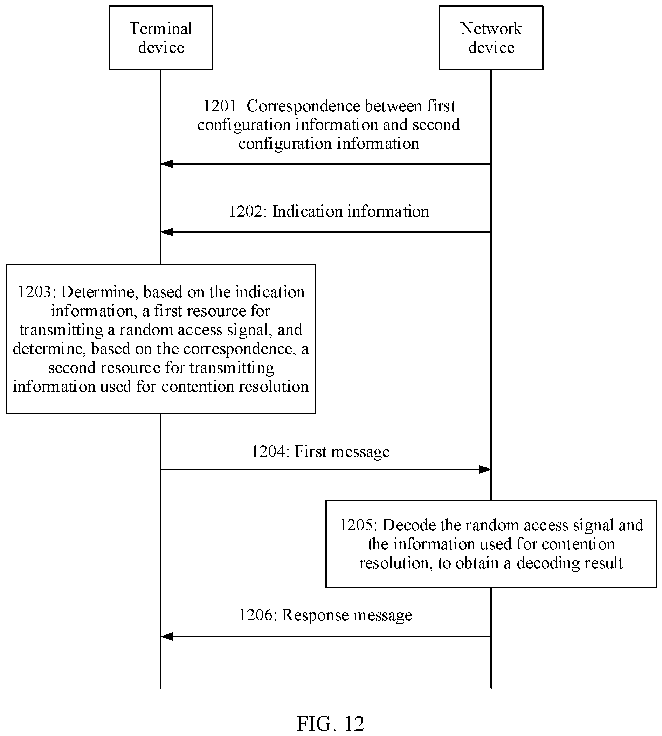

FIG. 12 is a schematic diagram of a communication method according to an embodiment of this application. In the figure, a resource for sending a random access signal and a resource for sending information used for contention resolution in a random access procedure is determined in the foregoing manner 2. As shown in FIG. 12, the method includes the following steps.

1201: A network device sends a correspondence between first configuration information and second configuration information to a terminal device.

The network device may send the correspondence between the first configuration information and the second configuration information to the terminal device. The first configuration information is used to configure the resource for transmitting the random access signal, and the second configuration information is used to configure the resource for transmitting the information used for contention resolution.

The correspondence between the first configuration information and the second configuration information may be directly reflected when the network device delivers the first configuration information and the second configuration information to the terminal device. For example, the first configuration information and the second configuration information that have the correspondence are placed in a same message or a same configuration information element to reflect the correspondence between the first configuration information and the second configuration information. Alternatively, an identifier of another piece of configuration information is set in one piece of configuration information to reflect the correspondence between the first configuration information and the second configuration information. In another possible implementation, the network device may deliver the first configuration information and the second configuration information to the terminal device in advance, and then deliver the correspondence between the first configuration information and the second configuration information to the terminal device. This is not specifically limited in this application. In addition, in this embodiment, the first configuration information and the second configuration information may be sent by the network device to the terminal device by using system information or dedicated signaling. This is not specifically limited in this application. Alternatively, the network device may send the first configuration information and the second configuration information to the terminal device in a broadcast or unicast manner. This is not specifically limited in this application.

It should be noted that for specific content included in the first configuration information and the second configuration information, refer to the specific description in step 1101 in FIG. 11. Details are not described herein again.

1202: The network device sends indication information to the terminal device.

The network device may send the indication information to the terminal device, where the indication information includes target first configuration information, and the target first configuration information is used to configure a first resource for transmitting the random access signal.

1203: The terminal device determines, based on the indication information, the first resource for transmitting the random access signal, and determines, based on the correspondence, a second resource for transmitting the information used for contention resolution.

The terminal device may determine, based on the indication information, the first resource for transmitting the random access signal. Then the terminal device may determine, in the second configuration information based on the correspondence, target second configuration information of the information used for contention resolution, and then determine, based on the target second configuration information, the second resource for transmitting the information used for contention resolution.

It should be noted that, in step 1202, the indication information may alternatively include the target second configuration information. To be specific, the network device indicates, to the terminal device, the target second configuration information of information used for contention resolution. Then the terminal device determines the target first configuration information of the random access signal based on the correspondence and the first configuration information.

1204: The terminal device sends a first message to the network device.

1205: The network device decodes the random access signal and the information used for contention resolution, to obtain a decoding result.

1206: The terminal receives a response message sent by the network device.

Step 1204 to step 1206 are similar to step 1103 to step 1105 in FIG. 11. Details are not described herein again.

In this embodiment of this application, the terminal device receives the correspondence that is between the first configuration information and the second configuration information and that is sent by the network device. Then the terminal device receives the indication information sent by the network device. The terminal device determines, based on the indication information, the first resource for transmitting the random access signal, and determines, based on the correspondence, the second resource for transmitting the information used for contention resolution. The terminal device sends the first message to the network device. The first message includes the random access signal and the information used for contention resolution. Then the network device decodes the random access signal and the information used for contention resolution, and notifies, by using the response message, the random access status of the terminal device, to be specific, whether random access succeeds. In the foregoing procedure, because the terminal device has the pre-assigned resource used to transmit the information used for contention resolution, and the information used for contention resolution and the random access signal are sent in one step, the random access procedure is reduced. Therefore, interaction procedures in the random access procedure are fewer than those in a conventional technology, thereby reducing a latency of the random access of the terminal device.

An embodiment of this application further provides an apparatus configured to implement any one of the foregoing methods. For example, this embodiment of this application provides an apparatus including units (or means) that are used to implement the steps performed by the terminal device in any one of the foregoing methods. For another example, this embodiment of this application provides another apparatus including units (or means) used to implement the steps performed by the network device in any one of the foregoing methods.

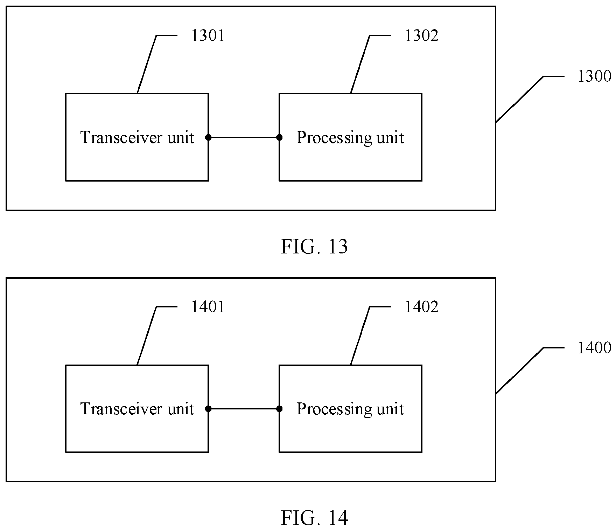

FIG. 13 is a possible schematic structural diagram of the terminal device in the foregoing embodiments. In some scenarios, the terminal device may be understood as a communication apparatus 1300 shown in FIG. 13. The communication apparatus 1300 may implement the functions of the terminal device in the embodiments shown in FIG. 4, FIG. 5, FIG. 6, FIG. 7, FIG. 8, FIG. 9, FIG. 10, FIG. 11, and FIG. 12. Referring to FIG. 13, the communication apparatus 1300 includes a transceiver unit 1301 and a processing unit 1302. These units may perform the corresponding functions of the terminal device in the foregoing method embodiments. The transceiver unit 1301 is configured to support the communication apparatus 1300 in performing the processes 401 and 402 in FIG. 4, the process 502 in FIG. 5, the process 602 in FIG. 6, the process 702 in FIG. 7, the process 802 in FIG. 8, the process 902 in FIG. 9, the processes 1103 and 1105 in FIG. 11, and the processes 1201, 1202, 1204, and 1206 in FIG. 12. The processing unit 1302 is configured to support working of the transceiver unit 1301 in the communication apparatus 1300, and is configured to perform the process 501 in FIG. 5, the process 601 in FIG. 6, the process 701 in FIG. 7, the process 801 in FIG. 8, the process 901 in FIG. 9, the process 1001, 1002, and 1003 in FIG. 10, the process 1102 in FIG. 11, the process 1203 in FIG. 12, and/or another process performed by the terminal device in the technology described in this specification. For example, the transceiver unit 1301 is configured to perform the operation performed by the terminal device in the foregoing method embodiments, to be specific, send the first message to the network device, and receive the response message for the first message from the network device. The processing unit 1302 is configured to determine, based on the length information of the contention resolution identifier and the contention resolution identifier, that the contention is resolved. For a specific execution process, refer to the detailed description of the corresponding steps in the embodiments shown in FIG. 4 to FIG. 12. Details are not described herein again.

FIG. 14 is a possible schematic structural diagram of the network device in the foregoing embodiments. In some scenarios, the network device may be understood as a communication apparatus 1400 shown in FIG. 14. The communication apparatus 1400 may implement the functions of the network device in the embodiments shown in FIG. 4, FIG. 5, FIG. 6, FIG. 7, FIG. 8, FIG. 9, FIG. 11, and FIG. 12. Referring to FIG. 14, the communication apparatus 1400 includes a transceiver unit 1401 and a processing unit 1402. These units may perform the corresponding functions of the network device in the foregoing method embodiments. The transceiver unit 1401 is configured to support the communication apparatus 1400 in performing the processes 401 and 402 in FIG. 4, the process 502 in FIG. 5, the process 602 in FIG. 6, the process 702 in FIG. 7, the process 802 in FIG. 8, the process 902 in FIG. 9, the process 1101, 1103, and 1105 in FIG. 11, and the processes 1201, 1202, 1204, and 1206 in FIG. 12. The processing unit 1402 is configured to support working of the transceiver unit 1401 in the communication apparatus 1400, and is configured to perform the process 1104 in FIG. 11, the process 1205 in FIG. 12, and/or another process performed by the network device in the technology described in this specification. For example, the transceiver unit 1401 is configured to perform the operation in the foregoing method embodiments, to be specific, receive the first message sent by the terminal device, and send the response message to the terminal device based on the decoding result of the random access signal and the information used for contention resolution. The processing unit 1402 is configured to decode the random access signal and the information used for contention resolution, to obtain the decoding result. For a specific execution process, refer to the detailed description of the corresponding steps in the embodiments shown in FIG. 4, FIG. 5, FIG. 6, FIG. 7, FIG. 8, FIG. 9, FIG. 11, and FIG. 12. Details are not described herein again.

It should be understood that division into the units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. Alternatively, each unit may be stored in the memory in a form of a program to be invoked by a processing element of the apparatus to perform a function of the unit. In addition, the units may be all or partially integrated, or may be implemented independently. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

In an example, a unit in any one of the foregoing apparatuses may be one or more integrated circuits configured to implement the foregoing methods, for example, one or more specific integrated circuits (application specific integrated circuit, ASIC), one or more microprocessors (digital signal processor, DSP), one or more field programmable gate arrays (field programmable gate array, FPGA), or a combination of at least two of the integrated circuit forms. For another example, when the unit in the apparatus is implemented by scheduling a program by a processing element, the processing element may be a general purpose processor, for example, a central processing unit (central processing unit, CPU) or another processor that can invoke the program. For another example, the units may be integrated together and implemented in a form of a system-on-a-chip (system-on-a-chip, SOC).

The foregoing receiving unit is an interface circuit of the apparatus, and is configured to receive a signal from another apparatus. For example, when the apparatus is implemented in a manner of a chip, the transceiver unit is an interface circuit that is of the chip and that is configured to receive a signal from another chip or apparatus. The foregoing sending unit is an interface circuit of the apparatus, and is configured to send a signal to another apparatus. For example, when the apparatus is implemented in a manner of a chip, the transceiver unit is an interface circuit that is of the chip and that is configured to send a signal to another chip or apparatus.

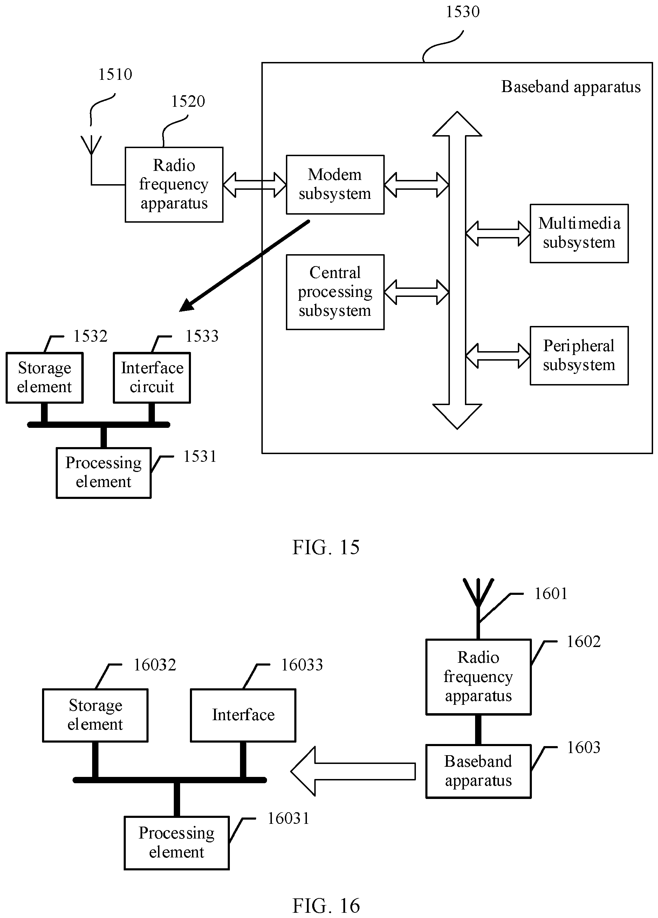

FIG. 15 is a schematic structural diagram of a terminal device according to an embodiment of this application. The terminal device may be the terminal device in the foregoing embodiments and is configured to implement the operations of the terminal device in the foregoing embodiments. As shown in FIG. 15, the terminal device includes an antenna 1510, a radio frequency part 1520, and a signal processing part 1530. The antenna 1510 is connected to the radio frequency part 1520. In a downlink direction, the radio frequency part 1520 receives, through the antenna 1510, information sent by a network device, and sends, to the signal processing part 1530 for processing, the information sent by the network device. In an uplink direction, the signal processing part 1530 processes information about the terminal device, and sends the information to the radio frequency part 1520. The radio frequency part 1520 processes the information about the terminal device, and then sends the processed information to the network device through the antenna 1510.

The signal processing part 1530 may include a modem subsystem, configured to process data at each communication protocol layer. The signal processing part 1530 may further include a central processing subsystem, configured to process an operating system and an application layer of the terminal device. In addition, the signal processing part 1530 may further include another subsystem such as a multimedia subsystem or a peripheral subsystem. The multimedia subsystem is configured to control a camera or a screen display of the terminal. The peripheral subsystem is configured to connect to another device. The modem subsystem may be a separately disposed chip. Optionally, the foregoing apparatus used for the terminal device may be located in the modem subsystem.

The modem subsystem may include one or more processing elements 1531, for example, include a main control CPU and another integrated circuit. In addition, the modem subsystem may further include a storage element 1532 and an interface circuit 1533. The storage element 1532 is configured to store data and a program. However, a program used to perform the methods performed by the terminal device in the foregoing methods may not be stored in the storage element 1532, but is stored in a memory outside the modem subsystem, and is loaded and used by the modem subsystem when to be used. The interface circuit 1533 is configured to communicate with another subsystem. The foregoing apparatus used for the terminal device may be located in the modem subsystem, and the modem subsystem may be implemented by using a chip. The chip includes at least one processing element and an interface circuit. The processing element is configured to perform the steps of any one of the methods performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the methods performed by the terminal device in the foregoing method embodiments. The storage element may be a storage element located on a same chip as the processing element, namely, an on-chip storage element.

In another implementation, the program used to perform the methods performed by the terminal device in the foregoing methods may be in a storage element located on a different chip from the processing element, that is, an off-chip storage element. In this case, the processing element invokes or loads the program from the off-chip storage element to the on-chip storage element, to invoke and perform the methods performed by the terminal device in the foregoing method embodiments.

In still another implementation, units of the terminal device that implement the steps in the foregoing methods may be configured as one or more processing elements. These processing elements are disposed in the modem subsystem. The processing element herein may be an integrated circuit, for example, one or more ASICs, one or more DSPs, one or more FPGAs, or a combination of these types of integrated circuits. The integrated circuits may be integrated together to form a chip.

Units of the terminal device that implement the steps in the foregoing methods may be integrated together, and implemented in a form of a system-on-a-chip (system-on-a-chip, SOC). The SOC chip is configured to implement the foregoing methods. At least one processing element and storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by the processing element invoking a program, and functions of some units may be implemented by the integrated circuit.

It can be learned that the foregoing apparatus used for the terminal device may include at least one processing element and interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logic circuit in the processor element in combination with an instruction; or may certainly perform, by combining the first manner and the second manner, some or all steps performed by the terminal device.

As described above, the processing element herein may be a general purpose processor, for example, a CPU, or may be one or more integrated circuits configured to implement the foregoing methods, for example, one or more ASICs, one or more microprocessors DSPs, one or more FPGAs, or a combination of at least two of the integrated circuit forms.

The storage element may be one memory, or may be a general name of a plurality of storage elements.

FIG. 16 is a schematic structural diagram of a network device according to an embodiment of this application. The network device is configured to implement the operations of the network device in the foregoing embodiments. As shown in FIG. 16, the base station includes an antenna 1601, a radio frequency apparatus 1602, and a baseband apparatus 1603. The antenna 1601 is connected to the radio frequency apparatus 1602. In an uplink direction, the radio frequency apparatus 1602 receives, by using the antenna 1601, information sent by a terminal device, and sends, to the baseband apparatus 1603 for processing, the information sent by the terminal device. In a downlink direction, the baseband apparatus 1603 processes information about the terminal device, and sends the information to the radio frequency apparatus 1602. The radio frequency apparatus 1602 processes the information about the terminal device, and then sends the processed information to the terminal device by using the antenna 1601.

The baseband apparatus 1603 may include one or more processing elements 16031, for example, include a main control CPU and another integrated circuit. In addition, the baseband apparatus 1603 may further include a storage element 16032 and an interface 16033. The storage element 16032 is configured to store a program and data. The interface 16033 is configured to exchange information with the radio frequency apparatus 1602, and the interface is, for example, a common public radio interface (common public radio interface, CPRI). The foregoing apparatus used for the network device may be located in the baseband apparatus 1603. For example, the foregoing apparatus used for the network device may be a chip in the baseband apparatus 1603. The chip includes at least one processing element and an interface circuit. The processing element is configured to perform the steps of any of the methods performed by the network device. The interface circuit is configured to communicate with another apparatus. In an implementation, units of the network device that implement the steps in the foregoing methods may be implemented by a program scheduled by a processing element. For example, the apparatus used for the network device includes a processing element and a storage element. The processing element invokes a program stored in the storage element, to perform the methods performed by the network device in the foregoing method embodiments. The storage element may be a storage element located on a same chip as the processing element, namely, an on-chip storage element, or may be a storage element located on a different chip from the processing element, namely, an off-chip storage element.

In another implementation, units of the network device that implement the steps in the foregoing methods may be configured as one or more processing elements. The processing elements are disposed in the baseband apparatus. The processing element herein may be an integrated circuit, for example, one or more ASICs, one or more DSPs, one or more FPGAs, or a combination of the types of integrated circuits. The integrated circuits may be integrated together to form a chip.

Units of the network device that implement the steps in the foregoing methods may be integrated together, and implemented in a form of a system-on-a-chip (system-on-a-chip, SOC). For example, the baseband apparatus includes the SOC chip, configured to implement the foregoing methods. At least one processing element and storage element may be integrated into the chip, and the processing element invokes a program stored in the storage element to implement the foregoing methods performed by the network device. Alternatively, at least one integrated circuit may be integrated into the chip, to implement the foregoing methods performed by the network device. Alternatively, with reference to the foregoing implementations, functions of some units may be implemented by the processing element invoking a program, and functions of some units are implemented by the integrated circuit.

It can be learned that the foregoing apparatus used for the network device may include at least one processing element and interface circuit. The at least one processing element is configured to perform any one of the methods that are performed by the network device and that are provided in the foregoing method embodiments. The processing element may perform some or all steps performed by the network device, in a first manner, to be specific, by invoking the program stored in the storage element; or may perform some or all steps performed by the network device, in a second manner, to be specific, by using a hardware integrated logic circuit in the processor element in combination with an instruction; or may certainly perform, by combining the first manner and the second manner, some or all steps performed by the network device.

As described above, the processing element herein may be a general purpose processor, for example, a CPU, or may be one or more integrated circuits configured to implement the foregoing methods, for example, one or more ASICs, one or more microprocessors DSPs, one or more FPGAs, or a combination of at least two of the integrated circuit forms.

The storage element may be one memory, or may be a general name of a plurality of storage elements.

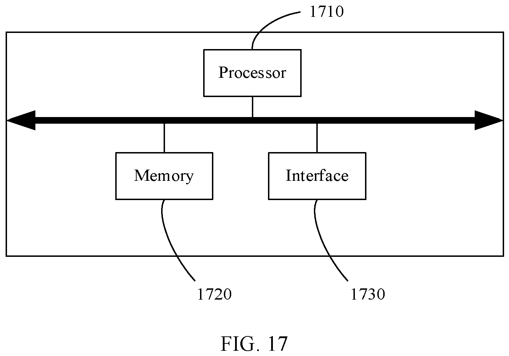

FIG. 17 is a schematic structural diagram of another network device according to an embodiment of this application. The network device may be the network device in the foregoing embodiments and is configured to implement the operations of the network device in the foregoing embodiments.

As shown in FIG. 17, the network device includes a processor 1710, a memory 1720, and an interface 1730. The processor 1710, the memory 1720, and the interface 1730 are signal-connected.

The foregoing communication apparatus 1400 is located in the network device, and functions of the units may be implemented by the processor 1710 invoking a program stored in the memory 1720. That is, the foregoing communication apparatus 1400 includes a memory and a processor. The memory is configured to store a program, and the program is invoked by the processor to perform the methods in the foregoing method embodiments. The processor herein may be an integrated circuit having a signal processing capability, for example, a CPU. Alternatively, functions of the foregoing units may be implemented by one or more integrated circuits configured to implement the foregoing methods, for example, one or more ASICs, one or more microprocessors DSPs, one or more FPGAs, or a combination of at least two of the integrated circuit forms. Alternatively, the foregoing implementations may be combined.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions in this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended to describe the technical solutions in this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in the embodiments of this application.

## Claims

1. A communication method, comprising:
sending, by a terminal device, a first message to a network device, wherein the first message comprises a random access signal and information used for contention resolution, and the random access signal and the information used for contention resolution are transmitted by using pre-assigned resources; and
receiving, by the terminal device, a response message for the first message from the network device, wherein the response message is used to indicate a random access status of the terminal device.

2. The method according to claim 1, wherein the random access signal comprises a random access preamble and/or a demodulation reference signal DMRS.

3. The method according to claim 1 or 2, wherein the information used for contention resolution comprises at least one of the following information: an identifier of the terminal device, a cause value of random access, and a random number.

4. The method according to any one of claims 1 to 3, wherein the response message comprises a contention resolution identifier, the contention resolution identifier is used to indicate that contention is resolved or used to indicate that the random access succeeds, and the contention resolution identifier is obtained based on the information used for contention resolution.

5. The method according to claim 4, wherein the contention resolution identifier comprises a part or all of content of the information used for contention resolution or downlink control information scrambled by using a temporary cell radio network temporary identifier C-RNTI of the terminal device.

6. The method according to claim 5, wherein the response message further comprises length information of the contention resolution identifier, the contention resolution identifier comprises the part or all of the content of the information used for contention resolution, and the method further comprises:
determining, by the terminal device based on the length information of the contention resolution identifier and the contention resolution identifier, that the contention is resolved.

7. The method according to any one of claims 4 to 6, wherein the response message further comprises one or a combination of the following: the temporary cell radio network temporary identifier, indication information of a timing advance, uplink grant information, downlink assignment information, and indication information of a hybrid automatic repeat request HARQ feedback.

8. The method according to any one of claims 1 to 3, wherein the response message comprises a first message and a second message, the first message comprises information indicating that a contention resolution identifier exists, and the second message comprises the contention resolution identifier.

9. The method according to claim 8, wherein the first message further comprises one or a combination of the following: a temporary cell radio network temporary identifier, indication information of a timing advance, uplink grant information, downlink assignment information, and indication information of a hybrid automatic repeat request HARQ feedback; or
the second message further comprises one or a combination of the following: a temporary cell radio network temporary identifier, indication information of a timing advance, uplink grant information, downlink assignment information, and indication information of a hybrid automatic repeat request HARQ feedback.

10. The method according to any one of claims 1 to 9, wherein the method further comprises:
receiving, by the terminal device, first configuration information and second configuration information from the network device, wherein the first configuration information is used to configure a first resource for transmitting the random access signal, and the second configuration information is used to configure a second resource for transmitting the information used for contention resolution; and
sending, by a terminal device, a first message to a network device comprises:
sending, by the terminal device, the random access signal by using the first resource configured by using the first configuration information, and sending, by using the second resource configured by using the second configuration information, the information used for contention resolution.

11. The method according to any one of claims 1 to 9, wherein the method further comprises:
receiving, by the terminal device, a correspondence between first configuration information and second configuration information from the network device, wherein the first configuration information is used to configure a resource for transmitting the random access signal, and the second configuration information is used to configure a resource for transmitting the information used for contention resolution; and
receiving, by the terminal device, indication information from the network device, wherein the indication information is used to indicate target first configuration information; and
sending, by a terminal device, a first message to a network device comprises:
transmitting, by the terminal device, the random access signal by using a first resource configured by using the target first configuration information, and transmitting, by using a second resource configured by using target second configuration information corresponding to the target first configuration information, the information used for contention resolution.

12. The method according to any one of claims 1 to 11, wherein the response message is further used to indicate new transmission, and the method further comprises:
performing, by the terminal device, new transmission of data based on the response message.

13. The method according to claim 12, wherein the response message comprises indication information of the new transmission or a parameter of the response message is used to indicate the new transmission, the indication information of the new transmission comprises the contention resolution identifier or a first radio network temporary identifier RNTI of the terminal device, and the parameter of the response message comprises an information element format of the response message or a quantity of response messages.

14. The method according to any one of claims 1 to 11, wherein the response message is further used to indicate retransmission, and the method further comprises:
performing, by the terminal device based on the response message, retransmission of the information used for contention resolution.

15. The method according to claim 14, wherein the response message comprises indication information of the retransmission or a parameter of the response message is used to indicate the retransmission, the indication information of the retransmission comprises information indicating that no contention resolution identifier exists or a second RNTI of the terminal device, and the parameter of the response message comprises an information element format of the response message or a quantity of response messages.

16. The method according to any one of claims 1 to 13, wherein the method further comprises:
discarding, by the terminal device, the resource used to transmit the random access signal; and/or
discarding, by the terminal device, the resource used to transmit the information used for contention resolution.

17. A communication method, comprising:
receiving, by a network device, a first message sent by a terminal device, wherein the first message comprises a random access signal and information used for contention resolution, and the random access signal and the information used for contention resolution are transmitted by using pre-assigned resources; and
sending, by the network device, a response message to the terminal device based on a result of decoding the random access signal and the information used for contention resolution, wherein the response message indicates a random access status of the terminal device.

18. The method according to claim 17, wherein the information used for contention resolution comprises at least one of the following information: an identifier of the terminal device, a cause value of random access, and a random number.

19. The method according to claim 17 or 18, wherein when the network device successfully decodes the information used for contention resolution, the response message comprises a contention resolution identifier, the contention resolution identifier is used to indicate that contention is resolved or used to indicate that the random access succeeds, and the contention resolution identifier is obtained based on the information used for contention resolution.

20. The method according to claim 19, wherein the contention resolution identifier comprises a part or all of content of the information used for contention resolution or downlink control information scrambled by using a temporary cell radio network temporary identifier C-RNTI of the terminal device.

21. The method according to claim 19 or 20, wherein the response message further comprises one or a combination of the following: the temporary cell radio network temporary identifier, indication information of a timing advance, uplink grant information, downlink assignment information, and indication information of a hybrid automatic repeat request HARQ feedback.

22. The method according to claim 17 or 18, wherein when the network device successfully decodes the information used for contention resolution, the sending, by the network device, a response message to the terminal device comprises:
sending, by the network device, a first message to the terminal device, wherein the first message comprises information indicating that a contention resolution identifier exists; and
sending, by the network device, a second message to the terminal device, wherein the second message comprises the contention resolution identifier.

23. The method according to any one of claims 17 to 22, wherein the method further comprises:
sending, by the network device, first configuration information and second configuration information to the terminal device, wherein the first configuration information is used to configure a first resource for transmitting the random access signal, and the second configuration information is used to configure a second resource for transmitting the information used for contention resolution.

24. The method according to any one of claims 17 to 22, wherein the method further comprises:
sending, by the network device, a correspondence between first configuration information and second configuration information to the terminal device, wherein the first configuration information is used to configure a resource for transmitting the random access signal, and the second configuration information is used to configure a resource for transmitting the information used for contention resolution; and
sending, by the network device, indication information to the terminal device, wherein the indication information is used to indicate target first configuration information, and the target first configuration information is used to configure a first resource for transmitting the random access signal.

25. The method according to any one of claims 17 to 24, wherein the response message is further used to indicate new transmission, the response message comprises indication information of the new transmission or a parameter of the response message is used to indicate the new transmission, the indication information of the new transmission comprises the contention resolution identifier or a first radio network temporary identifier RNTI of the terminal device, and the parameter of the response message comprises an information element format of the response message or a quantity of response messages.

26. The method according to claim 17 or 18, wherein the response message is further used to indicate retransmission, the response message comprises indication information of the retransmission or a parameter of the response message is used to indicate the retransmission, the indication information of the retransmission comprises information indicating that no contention resolution identifier exists or a second RNTI of the terminal device, and the parameter of the response message comprises an information element format of the response message or a quantity of response messages.

27. A communication apparatus, wherein the communication apparatus comprises a unit configured to perform the step according to any one of claims 1 to 16.

28. A communication apparatus, wherein the communication apparatus comprises a unit configured to perform the step according to any one of claims 17 to 26.

29. A communication apparatus, comprising a processor and an interface circuit, wherein the processor is configured to: communicate with a network device through the interface circuit, and perform the method according to any one of claims 1 to 16.

30. A communication apparatus, comprising a processor and an interface circuit, wherein the processor is configured to: communicate with a terminal device through the interface circuit, and perform the method according to any one of claims 17 to 26.

31. A communication apparatus, comprising a processor, wherein the processor is configured to: be connected to a memory, and invoke a program stored in the memory, to perform the method according to any one of claims 1 to 16.

32. A communication apparatus, comprising a processor, wherein the processor is configured to: be connected to a memory, and invoke a program stored in the memory, to perform the method according to any one of claims 17 to 26.

33. A computer-readable storage medium, comprising an instruction, wherein when the instruction is run on a computer, the computer is enabled to perform the method according to any one of claims 1 to 26.
